(19) Europäisches Patentamt
European Patent Office
Office européen des brevets

(11) Publication number: **0 173 157**
**B1**

(12) # EUROPEAN PATENT SPECIFICATION

(45) Date of publication of patent specification: **02.11.89**

(51) Int. Cl.$^4$: **G 01 N 27/56**

(21) Application number: **85110101.4**

(22) Date of filing: **12.08.85**

(54) **Air-fuel ratio detector.**

(30) Priority: **13.08.84 JP 167854/84**

(43) Date of publication of application:
**05.03.86 Bulletin 86/10**

(45) Publication of the grant of the patent:
**02.11.89 Bulletin 89/44**

(84) Designated Contracting States:
**DE FR GB**

(56) References cited:
**EP-A-0 020 938**
**EP-A-0 121 905**
**WO-A-85/00659**
**GB-A-2 033 085**
**GB-A-2 050 625**
**US-A-4 272 329**
**US-A-4 570 479**

**The file contains technical information submitted after the application was filed and not included in this specification**

(73) Proprietor: **HITACHI, LTD.**
**6, Kanda Surugadai 4-chome Chiyoda-ku**
**Tokyo (JP)**

(72) Inventor: **Suzuki, Seiko**
**3705, Kanai-cho Hitachiohta-shi**
**Ibaraki-ken (JP)**
Inventor: **Miki, Masayuki**
**1-5, Kosuna-cho Katsuta-shi**
**Ibaraki-ken (JP)**
Inventor: **Sasayama, Takao**
**7-14-11, Kanesawa-cho Hitachi-shi**
**Ibaraki-ken (JP)**
Inventor: **Suzuki, Toshitaka**
**1-28-32, Ishinazaka-cho Hitachi-shi**
**Ibaraki-ken (JP)**
Inventor: **Satou, Nobuo**
**6-30, Fukimatsu Onahama**
**Iwaki-shi Fukushima-ken (JP)**
Inventor: **Ueno, Sadayasu**
**847-33, Ichige Katsuta-shi**
**Ibaraki-ken (JP)**
Inventor: **Ikegami, Akira**
**1-3, Nishinarusawa-cho Hitachi-shi**
**Ibaraki-ken (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 173 157 B1**

**Description**

Background of the invention

This invention relates to an air-fuel ratio detector which detects the air-fuel ratio of the presently operating state of an automobile from its exhaust gas components. More specifically, the present invention relates to an air-fuel ratio detector of the kind referred to in the precharacterizing portion of patent Claim 1. Such a detector is known from GB—A—2 050 625.

Air-fuel ratio detectors, generally used, have a structure of a hollow pipe type oxygen sensor as disclosed, for example, in US—A—4,210,510. Platinum electrodes are disposed on both sides of a zirconia solid electrolyte, and one of the platinum electrodes is exposed to the atmosphere while the other being exposed to an exhaust gas. This hollow pipe type oxygen sensor detects the air-fuel ratio from the point of sudden change of an electromotive force E (a point generally referred to as a "stoichiometric air-fuel ratio" at which the air excess ratio $\lambda=1$, the electromotive force E being generated stepwise by the difference of the oxygen partial pressure in the exhaust gas with the atmosphere taken as reference. However, this sensor merely detects whether the air-fuel ratio is greater or smaller than the point $\lambda=1$, but does not detect the state of the air-fuel ratios which change in a lean range where $\lambda>1$ and in a rich range where $\lambda<1$.

Therefore, an air-fuel ratio detector has been developed recently, as disclosed in US—A—4,292,158, which measures the oxygen concentration in the exhaust gas and detects the air-fuel ratio from the oxygen concentration. In this air-fuel ratio detector, platinum electrodes are disposed on both surfaces of a zirconia solid electrolyte, and a cap having a space diffusion chamber, for example, is fitted to one of the surfaces. A diffusion hole through which the oxygen gas flows is disposed on the cap. This air-fuel ratio detector is exposed as a whole to the exhaust gas, and utilizes an oxygen pump phenomenon using the properties of the zirconia solid electrolyte. When a predetermined voltage is applied across both electrodes of a cell and the change of a pump current $I_P$ is measured, the value of this pump current $I_P$ is proportional to the oxygen concentration of the environment. Therefore, the air-fuel ratio $\lambda$ can be detected.

However, this sensor can not detect the stoichiometric air-fuel ratio, though it can detect the air-fuel ratio in the lean range ($\lambda>1$).

Although the inventors of the present invention developed a detector by integrally combining two detection means, it was found that both detection means interfered with each other and the detection accuracy was low for both the air-fuel ratio in the lean range and the stoichiometric air-fuel ratio.

Prior art document GB—A—2 050 625 discloses an air-fuel ratio detector comprising a solid electrolyte, a first electrode, a second electrode and a third electrode each being disposed on said solid electrolyte, means for supplying an exhaust gas by limited diffusion to said first and third electrodes so as to provide a combined lean detecting cell and stoichiometric detecting cell construction, and voltage supply means for suplying an exciting voltage across said first and second electrodes.

EP—A—0 020 938 discloses a polarographic sensor for determining the oxygen concentration in gases. The cathode of said sensor has a diffusion carrier in form of a hole. Instead a single hole it is possible to arrange a plurality of holes.

Summary of the invention

It is therefore an object of the present invention to provide an air-fuel ratio detector which can accurately detect both the lean air-fuel ratio and the stoichiometric air-fuel ratio.

It is another object of the present invention to provide an air-fuel ratio detector which can detect the air-fuel ratios from the lean range to the rich range.

This object is achieved with an air-fuel ratio detector as claimed in Claim 1.

Dependent claims are directed on features of preferred embodiments of the invention.

The present invention uses in common one of the electrodes of each of the lean cell and stoichiometric air-fuel ratio cell.

In accordance with the present invention, further, an impressed voltage on the lean cell controls that of the stoichiometric air-fuel ratio cell so as to have a rich air-fuel ratio also measurable.

Brief description of the drawings

Figure 1 shows an overall system of an internal combustion engine to which the present invention is applied;

Figures 2 through 5 show the construction and explain the operation of one embodiment of the present invention;

Figures 6 through 8 show the construction and explain the operation of another embodiment of the present invention;

Figures 9 through 18 show modified examples of the cell of the present invention;

Figures 19 through 22 show the construction and explain the operation of still another embodiment of the present invention;

Figures 23 through 28 show the construction and explain the operation of still another embodiment of the present invention; and

Figures 29 and 30 show the construction and explain the operation of still another embodiment of the present invention.

Referring to Figure 1 there is described a construction of an air-fuel ratio controller of an internal combustion engine in which an air-fuel ratio detector according to the present invention is employed.

The drawing illustrates an example of a system in which engine information from sensors such as an air-fuel ratio detector 100 consisting of an air-fuel ratio cell 100C and a sensor driving circuit 100D, an air flow sensor 102, a water temperature

sensor 103, a crank shaft sensor 104, and the like, is taken into a control unit 105, and is used for controlling a fuel injection valve 106, an ignition coil 107, an idle speed control valve 108, an exhaust gas recirculate control valve 109 and a fuel pump 110. The air-fuel ratio sensor 100 is one of the important devices of this system. A voltage is supplied by a battery 101 from a battery 101 to the air-fuel ratio detector 100 to operate it.

Conventional internal combustion engines have been controlled at a stoichiometric air-fuel ratio (air-fuel ratio A/F=14.7 and an air excess ratio $\lambda=1$) except when power is required such as in an acceleration condition. This is because only a stoichiometric air-fuel ratio sensor is available as a practical air-fuel ratio detector and in order to cope with an exhaust gas pollution. It is known that the combustion efficiency becomes maximal in a certain lean range of fuel mixture supplied for the engine. It is therefore desirable to control the engine for a lean mixture at least in the idle and light load conditions. To this end an air-fuel ratio sensor capable of accurately detecting the air-fuel ratio in such a lean range becomes necessary.

An embodiment of the present invention will now be described with reference to Figure 2.

When the cell 119 is exposed to the exhaust gas atmosphere, the exhaust gas flows into a diffusion chamber 128 of the lean sensor 127 and a diffusion chamber 129 of the stoichiometric air-fuel sensor 127' due to diffusion through the diffusion paths 130, 131. When an exciting voltage $E_L$ is applied across the anode 124 and the cathode 123 of the lean sensor cell 127, the oxygen molecules within the chamber 128 is reduced to oxygen ion ($O^{--}$) at a cathode 123. This reduction process is promoted by the cathode 123 of platinum acting as a cantalizer. The oxygen ion move towards an anode portion 124 inside the electrolyte 120 as indicated by a thick arrow in Figure 2. The oxygen ions reached to the anode 124 are oxidized thereat to turn against to the oxygen molecules and are emitted into the exhaust gas surrounding the cell 119 through a porous protective film 125. A set voltage $e_s$ is determined by a zener diode 128 and resistors 139 and 140. The exciting voltage $E_L$ applied to the anode 124 of the cell 127 is subjected to feedback control by means of a first amplifier 134 and a transistor 135 so that the electromotive force $e_o$ of an oxygen reference electrode 126 is equal to the set voltage $e_s$ which is determined by a zener diode 138 and resistors 139, 140.

The quantity of the oxygen ions which are generated at the cathode 123 upon application of the exciting voltage $E_L$ and transferred to the anode 124 and which flows through the zirconia solid electrolyte 120 can be measured by a current $I_P$ flowing through a current detecting resistor 132. The pumping current $I_P$ of the lean cell 127 is called the "limiting current value" in accordance with the rate-determination of diffusion, and is proportional to the oxygen partial pressure (concentration) $P_{o2}$ of residual oxygen in the exhaust gas as represented by the following equation:

$$I_P = \frac{4FDS}{RTl} \cdot P_{o2} \qquad (1)$$

with
F: Faraday constant,
D: diffusion constant of oxygen gas,
R: gas constant,
T: absolute temperature,
S: cross-sectional area of diffusion path 130,
l: length of the diffusion path 130.

As apparent from the above equation the partial pressure $P_{o2}$ of the oxygen can be linearly detected by the pumping current $I_P$. Since the partial pressure of the oxygen is in proportion to the concentration of the residual oxygen in the exhaust gas, the air-fuel ratio of the fuel mixture which is the case in the lean region ($\lambda>1$) thereof can be detected on the basis of the pumping current $I_P$.

Next, the stoichiometric function will be described. A current value $I_p{}^*$ is applied between the oxygen reference electrode 126 and the cathode 123 from a current source (preferably, a constant current source). An exciting current value $I_p{}^*$ to the oxygen reference electrode 126 is determined by the resistance value $R\lambda$ of an exciting current adjustment resistor 137. A part of the oxygen gas flowing into the diffusion chamber 128 at the diffusion rate-determining speed through the diffusion path 130 is reduced to oxygen ion ($O^{--}$) at the cathode 123, which then moves towards the oxygen reference electrode 126 inside the zirconia solid electrolyte 120, are oxidized the oxygen gas at this reference oxygen electrode 126 and are thereafter emitted into the diffusion chamber 129.

Since the diffusion path 131 has a form such that its resistivity (l/S) (l is the length of the path and S is the sectional area thereof) is at least ten times larger than that of the diffusion path 130, the quantity of gas flowing into the diffusion chamber 129 through the diffusion path 131 is drastically reduced. As a result, in the rich range, too, the quantity of carbon monoxide (CO) which flows due to diffusion into the diffusion chamber 129 through the diffusion path 131 is smaller than the quantity of oxygen which is emitted into the diffusion chamber 129 by the exciting current $I_p{}^*$ from the current source. Therefore, the oxygen concentration inside the diffusion chamber 129 is above a certain level irrespective of the air excess ratio $\lambda$.

As already described, the exciting voltage $E_L$ applied to the anode 124 is subjected to feedback control by means of the first amplifier 134 and the transistor 135 so that the electromotive force $e_o$ of the oxygen reference electrode 126 is equal to the set voltage $e_s$ (which is selected to be a value of from 0.2 to 1 V, whenever necessary). In other words, since feedback control is effected in such a manner that the oxygen partial pressure ratio between the oxygen reference electrode 126 and the cathode 123 becomes great, the oxygen concentration at the cathode interface portion 123 becomes substantially zero. As a result, the pumping capacity of the cathode 123 is electrically compensated for, the lean cell 127 is less susceptible to the electrode degradation, the formula (1) is strictly reproduced and the reliability of the lean function can be improved. The quantity of the oxygen gas flowing by diffusion into the diffusion chamber 128 through the diffusion path 130 at the stoichiometric air-fuel ratio is stoichiometrically equal to the quantity of the carbon monoxide gas, so that $i_p$ becomes zero at this stoichiometric point. Therefore, the output voltage $E_A$ of the first amplifier 134 and the exciting voltage $E_L$ drops stepwise until they reach zero.

At this time, the difference voltage $\Delta V$ between the oxygen reference electrode 126 and the anode 124 changes stepwise from zero to the order of 1 volt. Therefore, the stoichiometric point can be detected highly accurately by utilizing any of those signals ($\Delta V$, $E_A$, $E_L$) which change stepwise. The following description will be made on the case where $\Delta V$ is used among them.

Oxygen and carbon monoxide that flow to the anode 124 through a protective film 125 cause the reaction of the following reaction formula (2) due to the catalytic action of the anode 124 (because it is made of a platinum type material):

$$2CO+O_2 \rightleftarrows 2CO_2 \qquad (2)$$

As a result, the oxygen concentration at the interface of the anode 124 becomes substantially zero at the stoichiometric air-fuel ratio where the quantity of oxygen is stoichiometrically equal to that of carbon monoxide. The oxygen concentration at the interface of the oxygen reference electrode 126 is subjected to the feedback control by an electric circuit so that it exceeds a certain level but does not depend upon the air excess ratio. Therefore, the difference voltage $\Delta V$ changes stepwise at the stoichiometric point. The difference voltage $\Delta V$ can be given as follows where $P_I$ and $P_{II}$ represent the oxygen partial pressures at the interface of the anode 124 and at the interface of the oxygen reference electrode 126, respectively:

$$\Delta V=\frac{RT}{4F}\ln\frac{P_{II}}{P_I}+{}_rI_p^* \qquad (3)$$

The resistance loss overvoltage $rI_p^*$ of the second item on the right side of the formula (3) can be neglected because the excitation current value $I_p^*$ is sufficiently small, and because the resistance r of the zirconia solid electrolyte 120 is small since the air-fuel ratio sensor is heat-controlled to a constant temperature of at least about 600°C.

The excitation current value $I_p^*$ is sufficiently small when compared with the output current value of the lean cell 127, and does not at all affect the measuring accuracy of the lean function.

This embodiment includes one more improvement in which a second amplifier 141 and a switch 142 are provided to improve the signal-to-noise ratio (S/N) at the time of detection of the stoichiometric point. In other words, the second amplifier 141 is disposed in order to detect the timing at which the output voltage $E_A$ of the first amplifier 134 is smaller than the set voltage $e_s$, and the output signal of this second amplifier 141 turns on the switch 142 which is connected parallel between the anode 124 and the cathode 123 of the lean sensor cell 127. Though the switch 142 shown consists of a bipolar transistor, it may be of a MOS type. The output voltage $E_A$ of the first amplifier 134 becomes zero below the excess air ratio $\lambda^*$ on the lean side in the proximity of the stoichiometric point. Therefore, the transistor switch 142 is turned on below the excess air ratio, and the anode 124 and the cathode 123 of the lean cell 127 are electrically connected. When the switch 142 is turned on, the flow of the oxygen ions ($O^{--}$) due to the excitation current $I_p^*$ flows towards the oxygen reference electrode 126 also from the anode portion 124 of the lean cell 127. The catalytic action of the anode 124 is improved by this oxygen pump operation, and the reaction on the formula (2) proceeds vigorously. As a result, the oxygen concentration at the interface of the anode 124 becomes extremely small at the air-fuel ratio in the rich range, and the inclination characteristics described already can be improved.

Figure 3 shows an example of the measurement result of the characteristics of the air-fuel ratio detector having the construction described above. As shown in the diagram, the change width of the signal at the stoichiometric point becomes greater with $E_o$ and $E_L$, and the gentle inclination chracteristics in the rich range are found to have been improved. Incidentally, the exciting voltage $E_L$ to the lean cell in the rich range of $\lambda<1$ naturally drops to the zero volt level.

The arrangement in whch the oxygen ion flow is directed from the anode portion 124 to the oxygen reference electrode 126 by turning on the switch 142 not only improves the S/N ratio of the stoichiometric air-fuel ratio sensor 127′ but also provides the following effect.

The partial pressure of oxygen in the exhaust gas in the rich range is low. Therefore, in order to supply sufficient oxygen into the diffusion chamber 129 with the excitation current $I_p$, an electrode or electrodes must be additionally disposed as a new oxygen ion supply source(s). In this connection, the anode 124 serves as this new oxygen ion supply source in the rich range of $\lambda<1$. As a result, the drastic drop of the partial pressure of oxygen at the interface of the cathode 123 in the rich range can be prevented, and the zirconia solid electrolyte 120 does not fall into the electron conduction range. This in turn means that the deterioration of the performance of the air-fuel ratio sensor and the reduction of its accuracy become less, and its reliability can be improved.

Since the exciting voltage $E_L$ of the lean cell 127

is subjected to the feedback control, the response of the lean cell can be improved extremely drastically.

This effect will be explained in further detail with reference to Figures 4 through 8.

Figure 4 shows the V—I characteristics of the lean sensor cell 127. The diagram shows the characteristics of the current which is pumped inside the zirconia solid electrolyte 120 by the excitation voltage $E_L$. As the exciting voltage E becomes greater, the pump current value I increases gradually until it reaches saturation at a constant value. This saturation current value $I_p$ is the critical current value determined by the aforementioned formula (1). As the excitation voltage $E_L$ is further increased, the zirconia solid electrolyte 120 exhibits electron conductivity, and the current value I increases abruptly. In the case of the lean sensor cell 127, therefore, this saturation current value $I_p$ must be detected, and the exciting voltage $E_L$ applied to the lean sensor cell 127 is set to a suitable value in view of the relation shown in Figure 4. In the case of the circuit construction shown in Figure 2, the excitation voltage $E_L$ of the lean cell sensor 127 does not depend upon the air excess ratio in the range of $\lambda>1$ but is set at a substantially constant level as represented by a characteristics curve *a* in Figure 4. When the excitation voltage $E_L$ is gradually increased in response to the air excess ratio $\lambda$ as represented by a characteristics curve *b* in Figure 4, the response of the lean sensor cell 127 has been experimentally confirmed to be improved remarkably.

This phenomenon will be explained with reference to Figure 5. When the excitation voltage $E_L$ is changed stepwise within such a range in which no change occurs in the air excess ratio of the air-fuel ratio sensor atmosphere but in which the pump current value I exhibits the saturation current value (the critical current value), the characteristics of $E_L$ like the differential waveform are added to the output current value $I_p$. The present invention intends to utilize this phenomenon to improve the response of the lean sensor. Experiments reveal that the change width $\Delta I_p$ of the output current value $I_p$ depends substantially upon the change width $\Delta E_L$ of the exciting voltage $E_L$.

Figure 6 shows the overall construction of the air-fuel ratio detector for a car in accordance with the other embodiment of the present invention. This embodiment is characterized in that the output voltage of the first amplifier 134 is positively fed back to the decision portion of the set voltage $e_s$ through resistors 145 and 151. An integration circuit consisting of a resistor 146 and a capacitor 147 is disposed in order to prevent a transient oscillation phenomenon that occurs in the output signal $e_L$ of the lean sensor cell 127 due to the aforementioned positive feedback circuit.

In the air-fuel ratio detector shown in Figure 6, the set voltage $e_s$ is variable from 0.75 V to 0.80 Volts in response to the excess air ratio $\lambda$ in the lean region.

As a result, the excitation voltage $E_L$ of the lean sensor cell 127 is automatically subjected to the feedback control to a large value in accordance wth the air excess ratio $\lambda$ as represented by the characteristics curve *b* in Figure 4. Even if the excitation voltage $E_L$ of the lean sensor cell 127 is made thus variable, the output signal $e_L$ of the lean sensor cell, the signal $E_o$ that can be used as the output signal of the stoichiometric sensor and $E_L$ exhibit good characteristics with only a slight hysteresis.

Figure 7 shows an example of the actual measurement result which illustrates the response improving effect in the lean sensor cell output signal $e_L$ when the set voltage $e_s$ is made variable in the case of a lean mixture (that is, the excitation voltage $E_L$ is made variable). The diagram shows the mode of change in the output voltage of the second amplifier 143 as the output signal $e_L$ of the lean sensor cell 127 when the air excess ratio is changed stepwise from 1.1 to 1.3. The diagram shows the case where the characteristics *a* do not depend upon the air excess ratio and the exciting voltage $E_L$ of the lean sensor cell 127 is kept constant.

A characteristic line *b* represents the case where the exciting voltage $E_L$ is made suitably variable in accordance with the air excess ratio $\lambda$. It is found that the response in the characteristic line b can be reduced to about the half of the characteristics *a*. In the case of the characteristic line b, since the time constant $\tau$ of the lean sensor is as small as about 16 ms it is possible to discriminate the air-fuel ratio for each cylinder. If, however, the change of the exciting voltage $E_L$ with respect to that of the air excess ratio $\lambda$ is selected to be too large, the transient characteristics cause undesirable over-shoot as indicated by a characteristic line c.

Next, Figure 8 shows an example of the actual measurement result of the aged deterioration of the performance of the lean sensor cell. A characteristic line *a* represents the change with time of a lean sensor cell body itself. Its output signal drops gradually as the pumping ability of the cathode 123 deteriorates with the lapse of time. However, the construction of the present invention, in which the exciting voltage $E_L$ of the lean sensor cell 127 is controlled so that the electromotive force $e_o$ of the reference electrode 126 is equal to the set voltage $e_s$, operates in such a manner as to compensate for the drop of the pumping ability of the cathode 123 with the lapse of time. As a result, the change of the output signal of the lean sensor cell in accordance with the present invention becomes smaller as represented by the characteristic line b and the deterioration of the performance can be remarkably improved.

Next, measures for improving the deterioration of the performance of the stoichiometric air-fuel ratio sensor will be described.

A suitable exciting current value $I_p^*$ must be set in order to obtain a suitable stoichiometric function which has less hysteresis and is free from the level drop in the rich range. This object can be

accomplished by incrementally changing the set voltage $e_s$ at the stoichiometric point in such a manner as to set it to a low level for a rich mixture and to a high level for a lean mixture. In other words, a satisfactory stoichiometric function can be obtained even when the exciting current value $I_p$* is as small as 0.05 mA. In order to detect the critical current value $I_p$ highly accurately, the exciting voltage $E_L$ for the lean sensor cell 127 must be at a level exceeding a predetermined level, and the set voltage $e_s$ on the lean side cannot be set to a too small value.

From the aspect of the deterioration of the performance of the stoichiometric air-fuel ratio sensor too, it is advantageous to change stepwise the set voltage $e_s$ at the stoichiometric point. In other words, if the catalytic action of the anode 124 deteriorates with the lapse of time or if microfissures occur in the diffusion chamber 129, it is expected that the electromotive force for the rich mixture will be reduced.

Figure 6 shows one example of the construction which changes stepwise the set voltage $e_s$ at the stoichiometric point. The output voltage of the first amplifier 134 is made to be $2E_A$ by adding new resistors 149 and 150. This point is connected to the ground point via a resistor 151 and a zener diode (for 3V in the drawing). The change width of the set voltage $e_s$ in the lean range is limited by positively feeding back the voltage across the resistor 151 and the zener diode 152 to the set voltage $e_s$ determination portion, and the change width at the stoichiometric point can thus be increased.

A comparator 148 generates a switching-like stoichiometric signal e. That is, when the voltage $E_A$ becomes smaller than a slice level which is determined by resistors 153 and 154, it generates an H (high) level voltage signal eλ.

Next, various modifications of the sensor cell 119 having a tri-electrode structure will be explained with reference to Figures 9 through 18.

Figures 9(b) and 9(c) are sectional views taken along lines A—A and B—B of Figure 9(a), respectively. In Figure 9(a), a heater 122 encompassed by an insulating member 121 such as alumina is disposed at the center of the zirconia solid electrolyte 120, and the zirconia solid electrolyte 120 is equipped at its upper portion with the cathode 123, the anode 124 and a porous protective film 125, whereas it is equipped at its lower portion with the oxygen reference electrode 126. The portion consisting of the zirconia solid electrolyte 120, the cathode 123 and the anode 124 forms the lean sensor cell 127 described already.

The cathode 123 and the reference electrode 126 are disposed inside diffusion chambers 128 and 129, respectively, and come into contact with the exhaust gas as an object atmosphere to be measured which flows into the chambers 128 and 129 through slit-like diffusion paths 130 and 131, respectively. Preferably, the diffusion path 130 as the gas diffusion resistance is produced so that its resistivity is by at least some dozen times greater than that of the diffusion path 131. In other words, the path 131 is produced in such a fashion that the gas can not easily flow from the exhaust gas atmosphere into the diffusion chamber 129.

Since the present invention is based upon the principle that the stoichiometric air-fuel ratio is detected by controlling the partial pressure of oxygen at the reference electrode 126 by the oxygen pump action. Therefore, any introduction path through which a fresh air as a reference atmosphere as introduced is not necessary, and the structure of the sensor does not become complicated. All of the three electrodes (the cathode 123, the anode 124 and the oxygen reference electrode 126) can be made of a high melting point material having high durability such as of a platinum type without using non-catalytic gold electrodes.

As a result, it becomes possible to laminate the overall structure of the sensor portion shown in the drawing by thick film process techniques, and to sinter it simultaneously and integrally at a high temperature of about 1,500°C. In this case, the diffusion paths and the diffusion chambers can be simultaneously formed with the integral sintering by a baking method of a carbon type organic binder. Since no fresh air introduction path exists, the zirconia solid electrolyte 120 can be directly heated by the heater 122 so that the heat efficiency of the heater 122 can be improved. In this case, the laminate member of the sensor portion has a vertically symmetric structure with respect to the heater 122, provides excellent temperature distribution for the sensor portion and can control the temperature at a high constant temperature so that an air-fuel ratio detector having high accuracy but less temperature influence can be obtained.

Still another modification of the sensor cell 119 is shown in Figure 10. In the embodiment shown in Figure 10, the slit-like diffusion paths 130 and 131 in Figure 9 are changed to those 130′ and 131′ which are of a bored hole type.

There is no theoretical problem even if these diffusion paths 130′ and 131′ are made of a high porous material.

In the modifications of the sensor cell 119 shown in Figures 9 and 10, the right portion of the sensor portion is omitted, but this right portion is fixed to a plug member having a suitable shape, and is fitted to an exhaust pipe through this plug member.

Other modifications of the sensor cell according to the invention are shown in Figures 11 through 18.

The modification shown in Figure 11 is characterized in that the oxygen reference electrode 126 is disposed at an upper portion of the diffusion chamber 129. The diffusion paths 130 and 131 are shown schematically, as described above.

The modification shown in Figure 12 has a construction in which the diffusion path 131 of Figure 11 is made of a porous member 131″. In this case, the porous member 131″ is by far thicker than the protective film 125, or is made of a material having a low porosity.

The embodiment shown in Figure 13 has a construction in which the porous member 131'' of Figure 12 is disposed on the side of the lean cell 127. Though two oxygen reference electrodes 126 may seem existing in the drawing, it is connected plane-wise, and it is to be noted that the air-fuel ratio detector has also the trielectrode structure.

The embodiment shown in Figure 14 has a construction in which the relative disposition of the protective film 125 and the porous member 131'' in Figure 13 is reversed.

The embodiment shown in Figure 15 has a construction in which the oxygen reference electrode 126 is disposed in the diffusion chamber 128 via a porous diffusion member 131'''.

The embodiment shown in Figure 16 has a construction in which the porous member 131''' of Figure 15 does not exist. Though accuracy is reduced, a sensor cell theoretically has the same function as described above.

Figure 17 shows an embodiment which is an intermediate arrangement between Figures 13 and 14.

Figure 18 shows the embodiment in which the insulating member 121 existing in the foregoing embodiments is omitted by providing a substrate-like insulating member 136 such as an alumina substrate.

The embodiments described above, including the modifications of the sensor cell provide the air-fuel ratio detector having a tri-electrode structure formed on the same zirconia solid electrolyte and incorporating therein the heater. These embodiments provide the following effects by means of the method of regulating the direction of the oxygen ion stream between the electrodes, the driving method of the switch disposed in parallel with two electrodes of the lean sensor cell, and the controlling and setting method of the feedback of the electromotive force of the oxygen reference electrode.

(1) The structure of the air-fuel ratio detector and the structure of its driving circuit become simple.

(2) The accuracy and reliability of the air-fuel ratio detector can be improved.

(3) The response of the air-fuel ratio detector can be improved.

(4) The through-process of the thick film technology and the simultaneous and integral sintering process of the sensor portion become possible, and the mass-producibility of the air-fuel ratio detector can be improved.

(5) The adjustment method of the air-fuel ratio detector becomes simple, and the production yield can be improved.

Next, still another embodiment of the present invention will be described with reference to Figure 19.

In the drawing, the zirconia solid electrolyte 1 has a sectional shape such as shown in the drawing, and forms three layers 1A, 1B and 1C. A pair of platinum electrodes 2 and 3 are disposed in such a manner as to interposed the layer 1A between them. Another platinum electrode 6 is disposed on the layer 1C. The layers 1A and 1B together form a diffusion chamber 8, while the layers 1B and 1C together form a diffusion chamber 9. A gas diffusion hole 10 is formed in the diffusion chamber 8, while a gas diffusion hole 11 is disposed in the diffusion chamber 9. In the figure, the layer 1A of the zirconia solid electrolyte 1 and the platinum electrodes 2 and 3 form a linear sensor cell and the layer 1C of the zirconia solid electrolyte 1 and the platinum electrodes 2 and 6 constitutes an air-fuel ratio detection cell. The electrode 2 is used in common for both sensor cells. In this embodiment, both cells are integrated and are as a whole exposed into the exhaust gas.

Next, the operation of this embodiment will be described. Before the operation of the emodiment shown in Figure 19 is described in detail, the fundamental operation will be first explained with reference to Figure 20 showing the principal portions. Here, a fourth electrode 7 is added for the sake of explanation.

First of all, the operation of the linear sensor cell in the lean range will be described. In the lean range operation of the linear sensor cell, a voltage $V_B$ (e.g. 0.5 V) is applied from an exciting voltage source 12 across the platinum electrode 3 as the anode and the platinum electrode 2 as the cathode, and the oxygen existing inside the diffusion chamber 8 is then reduced to the oxygen ion by the platinum electrode 2 acting as the catalyzer. The oxygen ion passes through the layer 1A of the zirconia solid electrolyte 1 and moves towards the anode (the platinum electrode 3). The ionized oxygen is oxidized by the platinum electrode 3 acting as a catalyzer and is changed again to oxygen. The oxygen produced at the electrode 3 is thereafter emitted into the exhaust gas surrounding the sensor cell. The oxygen in the exhaust gas flows into the diffusion chamber 8 through the gas diffusion hole 10. The pumping current $I_P$ (the critical current) obtained when the quantity of oxygen emitted from the platinum electrode 3 into the exhaust gas balances with the quantity of oxygen flowing into the diffusion chamber 8 through the gas diffusion hole 10 is defined by the formula (1) and proportional to the partial pressure of oxygen. The characteristic of $I_P$ becomes linear, as shown in the range (LEAN) in Figure 21.

Therefore, the partial pressure of oxygen in the exhaust gas can be detected by measuring this pumping current $I_P$.

Next, the operation of the linear sensor cell in the rich range will be described. The quantity of oxygen in the exhaust gas in the rich range is only limited, but carbon monoxide (CO) increases in the rich range, that is, with the smaller air excess ratio λ. Therefore, the following reaction which is equivalent to the formula (3) takes place between CO and $O_2$ inside the diffusion chamber 8:

$$CO+\tfrac{1}{2}O_2 \rightleftarrows CO_2 \qquad (4)$$

On the contrary to the lean range oxygen is

supplied into the diffusion chamber 8 in the rich range so that it reacts with CO coming into the diffusion chamber 8, and the pumping current $I_P$ changes in accordance with the quantity of CO. Therefore, the CO quantity can be detected from the value of this pumping current $I_P$, and the air excess ratio λ can be detected. The characteristic of $I_P$ becomes linear, as shown in the range (RICH) in Figure 21.

The above can be accomplished by reversing the polarity of the voltage to be applied to the platinum electrodes 2 and 3 in the lean range, that is, by using the platinum electrode 2 as the anode and the platinum electrode 3 as the cathode, and applying the voltage $V_B$ from the exciting voltage source 12.

In the stoichiometric air-fuel ratio sensor cell, the platinum electrode 6 is used as the anode and the platinum electrode 2 as the cathode, throughout the full air-fuel ratio ranges, and a constant current $I_{PC}$ is caused to flow so that oxygen is supplied into the diffusion chamber 9. Since the diffusion hole 11 is smaller than the diffusion hole 10, the diffusion chamber 9 is filled with oxygen and enters the state equivalent to the atmosphere. Therefore, the ratio $d_1/d_2$ of the area $d_1$ of the diffusion hole 10 of the linear sensor cell to the area $d_2$ of the diffusion hole 11 of the stoichiometric air-fuel ratio sensor cell must satisfy the following relation:

$$\frac{d_1}{d_2} \geqq \frac{10}{1} \quad (5)$$

As a result, an electromotive force $E_1$ of about 1 V is generated between both the electrodes at the point of the stoichiometric air-fuel ratio λ=1, as is known from Nernst's equation. Therefore, the stoichiometric air-fuel ratio point λ=1 can be detected by detecting the point of occurrence of this electromotive force $E_1$, which changes stepwise as shown in Figure 21.

It can be understood from the above that in order to detect the air-fuel ratio in the full operating ranges, a positive excitation voltage $V_{B1}$ (e.g., 0.5 V) is applied in the lean range and a negative excitation voltage $-V_{B2}$ (e.g., −0.5 V) is applied in the rich range to obtain the pumping current $I_{OP}$ which corresponds to the air excess ratio λ. Here, the timing of the inversion of polarities of the excitation voltages $V_{B1}$ and $-V_{B2}$ can be decided by using the electromotive force $E_1$ generated by the stoichiometric air-fuel ratio sensor cell as a switching timing signal.

Turning back again to Figure 19, this embodiment will now be described.

In the drawing, $V_r$ is a reference voltage source such as a car battery 101; 20 and 21 are resistors connected to the reference voltage source; $T_R$ is an npn transistor whose collector is connected to the junction of the resistors 20 and 21 and whose emitter is grounded; $A_1$ is an operational amplifier whose (+) input terminal is connected to the collector of the transistor $T_R$ and whose output terminal is connected to a negative input terminal; 23 is a pumping current detection resistor which is connected to the output terminal of the operational amplifier $A_1$; $C_1$ is a comparator whose (+) input terminal is connected to the output E of a platinum electrode 6 and whose (−) input terminal is connected to a threshold voltage $V_{th}$ (e.g., 1 V); 24 through 29 are resistors; $A_2$ is another operational amplifier whose (+) input terminal is connected to the junction of the resistors 24, 25 and 26 and whose (−) input terminal is connected to the junction of the resistors 27, 28 and 29; $V_b$ is a bias voltage source as a reference of the level of an exciting voltage driving the cell; $V_{IP}$ is an output; 30 is a resistor; 31 is a zener diode for obtaining the reference voltage; 32 is a resistor for obtaining a constant current $I_{PC}$ from the constant voltage of the zener diode 31; and 33 and 34 are resistors for dividing the constant voltage of the zener diode 31 to obtain the aforesaid reference $V_b$. The resistors 20, 21, 30, 32, 33, 34 and the zener diode 31 constitute a power source circuit 35 for forming the voltage and current as the reference. The resistors 24, 25, 26, 27, 28, 29 and the operational amplifier $A_2$ constitute an addition/subtraction circuit 36 for processing the output signals. The comparator $C_1$ and the transistor $T_R$ constitute a voltage control circuit.

The wide range air-fuel ratio detector of this embodiment is constructed as described above.

Next, the operation of the embodiment shown in Figure 19 will be described definitely.

To detect the air-fuel ratios in the full operating ranges described above, the polarity of the exciting voltage of the linear sensor cell must be changed to $V_{B1}$ or $-V_{B2}$ at the point of the stoichiometric air-fuel ratio (λ=1). Therefore, three power sources including a ground level are necessary for the exciting voltage of the linear sensor cell. However, since a car uses a unipolarity battery as a power source, voltages of both polarities are obtained by a reference bias method of the exciting voltage. This can be accomplished by the reference voltage Vr, the resistors 20 and 21, the transistor $T_R$, the bias voltage source $V_b$ and the comparator $C_1$. In other words, when the output E of the stoichiometric air-fuel ratio sensor cell is smaller than the threshold voltage $V_{th}$ in the lean range, the output of the comparator $C_1$ is at the low level, and the transistor $T_R$ is cut off. When the cell output E is greater than the voltage $V_{th}$ in the rich range, the output of the comparator $C_1$ is at the high level and the transistor $T_R$ is turned on.

Therefore, there are provided three voltage levels, i.e., the bias voltage $V_b$, the voltage $V_{B1}$, when the transistor $T_R$ is cut off and the ground level when the transistor $T_R$ is turned on, and those have the relation below:

$$V_{B1}' > V_b > 0$$

Here, $V_{B1}'$ and $V_b$ are selected to be 1V and 0.5 V, respectively, by way of example. Accordingly,

the output of the operational amplifier $A_1$ is $V_{B1}'$ in the lean range, and the current flows from $V_{B1}'$ to $V_b$ with the platinum electrode 3 being at a high potential. Needless to say, the exciting voltage $V_{B1}$ between both electrodes in this case is $V_{B1}'-V_b$ (with the proviso that the voltage drop of the resistor 23 is small and can be neglected). In the rich range, the platinum electrode 3 is at the ground level, and the current flows from $V_b$ (corresponding to $-V_{B2}$ described above) with the platinum electrode 2 being at the high potential. Thus, the supply or withdrawal of oxygen into and from the diffusion chamber 8 is effected.

To bring the output of the operational amplifier $A_1$ to $V_{B1}'$ in the lean range and to the ground level in the rich range, the comparator $C_1$ compares whether or not the electromotive force E (0.6 V~1.4 V) of the stoichiometric air-fuel ratio sensor cell is greater than the threshold voltage $V_{th}$ (here, 1 V), and when the former is greater than the latter, the present operating state is judged as "rich" and when the former is smaller, the operating state is judged as "lean", thereby effecting ON-OFF control of the transistor $T_R$.

The pumping current $I_P$ flowing through the linear sensor ratio cell in accordance with the air-fuel ratios in the lean and rich ranges is detected from the potential difference at both ends of the pumping current detection resistor 23. The addition/subtraction circuit 36 consisting of the resistors 24~29 and the operational amplifier $A_2$ processes the output signals.

The output $V_{IP}$ of the operational amplifier $A_2$ is given by the following equation with $e_{24}$, $e_{25}$, $e_{27}$ and $e_{28}$ being the voltages applied to the resistors 24, 25, 27 and 28, respectively:

$$V_{IP}=(e_{24}+e_{25}-e_{27}-e_{28})\cdot K \qquad (6)$$

Here, K is the gain of the operational amplifier $A_2$, and is 1 (K=1) when the resistors 24 through 29 have the same resistance value. Since the input voltage $e_{28}$ is at the ground level, it is 0 (zero), and the equation (6) becomes as follows:

$$V_{IP}=e_{24}+e_{25}-e_{27} \qquad (7)$$

Therefore, the output $V_{IP}$ in the full air-fuel ratio ranges is a value obtained by adding a potential difference $\Delta V_{IP}$ at the resistor 23 due to the pumping current to the reference value $V_b$ in the lean range, and is a value obtained by subtracting $\Delta V_{IP}$ from $V_b$ in the rich range. In this manner, an air-fuel ratio sensor for a car which can obtain an analog and continuous output $V_{IP}$ in the full air-fuel ratio range can be accomplished.

Figure 22 shows the characteristics of the air-fuel ratio detector. As a result, the output voltage $V_{IP}$ can be obtained as a linear and analog quantity in the full air-fuel ratio range, that is, on all the air excess ratio λ.

Next, an explanation will be given on the stoichiometric air-fuel ratio sensor shown in Figure 19. Referring to Figure 20 which shows the fundamentals of the structure of this cell it consists of the solid electrolyte 1C, the platinum electrodes 6 and 7, the diffusion chamber 9 and the diffusion hole 11. The sensor is as a whole exposed into the exhaust gas. The inside of the diffusion chamber 9 is controlled to a high partial pressure of oxygen by causing the constant current $I_{PC}$ to flow throughout the full air-fuel ratio range, and the point at which the air excess ratio λ is 1 is detected from the electromotive force E. However, since carbon monoxide CO increases in the rich range, if the quantity of oxygen to be transferred into the diffusion chamber (which corresponds to the quantity of the constant current $I_{PC}$) is insufficient, the output of the electromotive force $E_1$ will drop due to the reaction of oxygen with carbon monoxide CO expressed by the reaction formula (4). The characteristics shown in Figure 23 represent the relation between the constant current $I_p$ (indicated as $I_{P1}$ to $I_{Pn}$ in the figure) and the electromotive force $E_1$. As shown in this drawing, $I_{PC}$ must be increased with decreasing λ in order to prevent the output drop of the electromotive force $E_1$ in the rich range.

Figure 24 shows the fundamentals of the structure to meet the aforesaid requirements for the stoichiometric air-fuel ratio sensor cell. In the figure, if the current to be passed is variably controlled throughout the rich range so that the electromotive force $E_1$ of the stoichiometric air-fuel ratio sensor cell becomes constant, a variable current $I_C$ corresponding to each λ can be obtained, and their relation is proportional.

In the drawing, if a set voltage $V_s$ (e.g. 0.9 V) equal to the electromotive force $E_1$ to be controlled is applied to the operational amplifier $A_3$, as the reference, the negative input terminal voltage, i.e. $E_1$ is controlled so as to become equal to the positive input terminal voltage, i.e. $e_s$ from the condition for the stable operation of the operational amplifier. Therefore, using any of the current $I_c$ flowing through a resistor $R_c$, the voltage appearing across the resistor $R_c$ and the output voltage $V_A$ of the amplifier $A_3$, the air-fuel ratio in the rich range of $\lambda \leq 1$, i.e. including the point of the stoichiometric air-fuel ratio, can be detected from the variation thereof with respect to λ.

Figure 25 shows an example of such characteristics. The output $V_A$ of the operational amplifier $A_3$ is inversely proportional to λ plotted on the abscissa. The offset voltage of the output $V_A$ which appears at the point of λ=1 can be easily eliminated by signal processing, if necessary, however, λ=1 can also be detected by positively utilizing the offset.

Figure 26 shows a further embodiment of the present invention, in which a stoichiometric air-fuel ratio sensor on the basis of the aforesaid principle is combined with the linear sensor the principle of which is described with reference to Figure 20.

Further, this embodiment aims to decrease the number of electrodes. Namely, although the number of electrodes of the stoichiometric air-fuel ratio sensor cell shown in Figure 20 is two,

that in this embodiment is decreased to one by using one of the electrodes of a linear sensor cell in common as one of the electrodes of a stoichiometric air-fuel ratio sensor cell. Sensors of this kind utilizing the oxygen pumping phenomenon are used at high temperatures with the lower limit being at about 600°C. Therefore these sensors need a heater, and electrodes and lead wires therefore must be increased as much. If the total number of electrodes is decreased it is advantageous for both the production process and the production cost.

The linear sensor cell consists of the zirconia solid electrolyte 50 and the platinum electrodes 51, 52 while the stoichiometric air-fuel ratio sensor cell consists of a zirconia solid electrode 50 and the platinum electrodes 53, 51. The electrode 51 is utilized in common with the linear sensor cell. The operation of the former is already described. The partial pressure of oxygen in the stoichiometric air-fuel ratio sensor cell is controlled by supplying a current between the platinum electrode 53 as the anode and the platinum electrode 51 as the cathode.

In the drawing, $V'_{s1}$ is a lean control set voltage $V_{s2}$ is a rich control set voltage; $A_4$ and $A_5$ are operational amplifiers in which $A_4$ is for driving the linear sensor cell and $A_5$ for the stoichiometric air-fuel ratio sensor cell; $R_L$ is a pump current detection resistor; $R_R$ is a resistor for detecting a variable current $I_C$; $C_2$ is a comparator for comparing the electromotive force of the stoichiometric air-fuel ratio sensor cell with $V_{s1}$; SW is a switch which is controlled by the comparator $C_1$; $e_L$ is an output voltage which indicates the air-fuel ratio in the lean range and $e_R$ is an output voltage which indicates the air-fuel ratio in the rich range.

The construction of the addition/subtraction circuit 36 is the same as that shown in Figure 19. The rich output voltage $e_R$ is applied to the (−) input terminal of the operational amplifier $A_2$ through a resistor 38. The power source circuit 37 is fundamentally the same as that shown in Figure 19.

When both the linear sensor cell and the stoichiometric air-fuel ratio sensor cell are simultaneously driven, most of the oxygen at the interface of the platinum electrode 51 in the linear sensor cell is transferred to the platinum electrode 52, but oxygen, though in a limited quantity, is also transferred to the platinum electrode 53 of the stoichiometric air-fuel ratio sensor cell, this mutual interference results from the common use of the electrode 51 for both sensor cells, and exerts adverse influences upon the measuring accuracy of the former cell. The interference between both sensor cells can be prevented on the driving circuit side by controlling the air-fuel ratio detecting cell so that the electromotive force of the stoichiometric air-fuel ratio detection cell (the terminal voltage $E_o$ of the platinum electrode 53) becomes a certain constant voltage $E_o$ (by making the quantity of oxygen at the interface of the platinum electrode 51 zero). In this case, the control value of the terminal voltage $E_o$ is selected from the range of from 0.2 V to 1 V (0.5 V in this embodiment).

The lean control set voltage $V'_{s1}$ applied to the operational amplifier $A_4$ corresponds to $E_o$ in the lean range, and controls the terminal voltage of the stoichiometric air-fuel ratio sensor cell to $V'_{s1}$. The partial pressure of oxygen in the exhaust gas atmosphere, that is, the air-fuel ratio, can be detected at this time by detecting the pumping current $I_P$ flowing through the resistor $R_L$. Therefore, the lean output voltage $e_L$ is produced by the pumping current $I_P$ and the voltage drop due to the pumping current detection resistor $R_L$. In the range where the operating condition is $\lambda \leqq 1$, the electromotive force of the electrode 53 of the stoichiometric air-fuel ratio sensor cell is produced stepwise, so that the input terminal of the (−) terminal of the operational amplifier $A_4$ becomes greater than $V_{s1}$, and the output of $A_4$ becomes zero.

On the other hand, the set voltage $V_{s2}$ applied to the operational amplifier $A_5$ corresponds to $E_o$ in the rich range, and controls the terminal voltage $E_o$ in the range of $\lambda \leqq 1$ by the operational amplifier $A_5$ so that $E_o$ becomes $V_{s2}$. The operation here is already described with reference to Figure 24, and the feed current $I_C$ is controlled so that the terminal voltage $E_o$ which drops due to CO diffused into the diffusion chamber becomes $V_{s2}$. In this manner, the output of the stoichiometric air-fuel ratio sensor cell, that is, the rich output voltage $e_R$, can be obtained from the output voltage of the operational amplifier $A_5$ which changes in response to $\lambda$ as shown in Figure 25.

The comparator $C_2$ and the switch SW are disposed in order to suppress the output voltage $e_R$ in the lean range. In the lean range, since the input relation of $A_5$ is $V_{s2} > V_{s1}$ ($E_o$) and the output is generated. Therefore, in this range, the switch SW is turned off by the comparator $C_2$ so as to remove the rich output voltage $e_R$. In the rich range, the switch SW is turned on, on the contrary, so as to produce the output voltage $e_R$.

Figure 27 shows an example of the characteristics of an experiment conducted by the method described above. The abscissa represents the excess air ratio $\lambda$, and the ordinate represents the rich/lean output voltages $e_R$, $e_L$. A linear lean output voltage $e_L$ can be obtained when $\lambda > 1$ and a linear rich output voltage $e_R$, when $\lambda < 1$.

The output voltages $e_L$ and $e_R$ are applied to the addition/subtraction circuit 36, respectively. The bias voltage $V_b$ is also applied to the addition/subtraction circuit 36. The lean output voltage $e_L$ and the bias voltage $V_b$ are applied to the (+) input terminal of the operational amplifier $A_2$, and the rich output voltage $e_R$, to the (−) input terminal of the amplifier $A_2$. Therefore, the output voltage $V_o$ of the addition/subtraction circuit 36 becomes such as one shown in Figure 28. The offset voltage at the point of $\lambda = 1$ is also used for the detection point of $\lambda = 1$.

A modified example of Figure 26 will be described with reference to Figure 29.

Figure 29 shows only the principal portions of

Figure 26 and like reference numerals are used to identify like constituents as in Figure 26. The difference from Figure 26 is an adjustment circuit, which consists of resistors 40 through 43 and an operational amplifier $A_6$. The (+) and (−) input terminals of the operational amplifier $A_6$ are connected to both ends of a detection resistor $R_R$. Therefore, the offset voltage $E_o$ at the point of $\lambda=1$ shown in Figure 28 is cancelled. Furthermore, the resistance of the feedback resistor 43 is variable, and can bring the inclination of the voltage $e_R$ into agreement with that of $e_L$ in Figure 30 with respect to $\lambda$. When this adjustment circuit 39 is used, therefore, the output $V_o$ of the air-fuel ratio detector 100 becomes such as shown in Figure 30.

The embodiments described in Figures 19, 26, 29 and the like provide the following effects.

(1) The air-fuel ratios in the full operating range can be detected in a wide range in air-fuel ratio detector which does not use an atmosphere reference or bias method and whose cells are as a whole exposed into the exhaust gas.

(2) The air-fuel ratio detector can be realized by a simple circuit to obtain an analog and linear output in accordance with a set voltage control method which changes over the polarities of the feed voltage to the air-fuel ratio detection cell in the lean and rich ranges.

(3) In accordance with the bias driving method, a simple circuit can be realized which makes it possible to control the air-fuel ratio detector by a unipolarity power source and to detect the air-fuel ratios in a wide range.

(4) The lean and rich output voltage signals including $\lambda=1$ can be standardized, and the load to peripheral circuits for controlling the engine, such as an A/D convertor, can be reduced.

## Claims

1. An air-fuel ratio detector comprising:

a solid electrolyte (127; 1; 50),

a first electrode (123; 2; 51), a second electrode (124; 3; 52) and a third electrode (126; 6; 53) each being disposed on said solid electrolyte,

means (130; 10) for supplying an exhaust gas by limited diffusion to said first and third electrodes so as to provide a combined lean detecting cell and stoichiometric detecting cell construction, and

voltage supply means ($V_r$) for supplying an exciting voltage across said first and second electrodes, characterized in that

a lean air-fuel ratio is detected from a pumping current flowing when oxygen diffused by said exhaust gas supplying means is pumped from said first electrode to said second electrode; and by

current supply means ($V_r$, 137) for causing a predetermined current to flow between said first and said third electrodes; and

control means (134, 135) for controlling the exciting voltage ($E_L$) supplied by said voltage supply means to maintain the potential of said third electrode to be equal to a predetermined voltage ($e_s$), whereby a stoichiometric air-fuel ratio is detected from an electromotive force produced between said first and second electrodes or between said second and third electrodes when oxygen passes from said first electrode to said third electrode and said third electrode is placed under an oxygen atmosphere.

2. The air-fuel ratio detector as defined in Claim 1 which further includes means (141, 142) for short-circuiting said first and second electrodes in a rich range.

3. The air-fuel ratio detector as defined in Claim 1 which further includes means (134, 145) for making a voltage ($e_s$) to be applied to said first and second electrodes variable in accordance with an air-fuel ratio.

4. The air-fuel ratio detector as defined in Claim 3 wherein said variable means (134, 145) further includes oscillation prevention means (146, 147).

5. The air-fuel ratio detector as defined in Claim 3 which further includes means (149, 150, 151, 152) for changing stepwise the impressed voltage ($e_s$) at a point of stoichiometric air-fuel ratio.

6. The air-fuel ratio detector as defined in Claim 1 wherein said diffusion limiting means for said lean air-fuel ratio detection means is slit-like diffusion paths (130 in Figure 9).

7. The air-fuel ratio detector as defined in Claim 1 wherein said diffuson limiting means for said lean air-fuel ratio detection means is diffusion holes of a bored hole type (130 in Figure 10).

8. The air-fuel ratio detector as defined in Claim 1 wherein said third electrode (126) is covered with a porous member (131″ in Figures 12, 13, 14, 15, 17 and 18).

9. The air-fuel ratio detector as defined in Claim 1 wherein said first electrode (123) and third electrode (126) are formed on the same plane of said solid electrolyte (127), and are covered with porous portions (125, 131″ in Figures 13, 14, 17 and 18) having varying diffusion resistance.

10. The air-fuel ratio detector as defined in Claim 1 wherein said third electrode (126 in Figures 15 and 16) is disposed inside a diffusion chamber (128) of said lean air-fuel ratio detection means.

11. The air-fuel ratio detector as defined in Claim 1 which further includes control means ($A_5$) for controlling said electromotive force ($e_o$) so that it becomes constant, and wherein the air-fuel ratio on the rich side is detected from a current ($I_c$) flowing into said second electrode.

12. The air-fuel ratio detector as defined in Claim 11 which further includes means ($C_2$, SW) for stopping the output from said current detection means when said electromotive force ($e_o$) is smaller than a predetermined value ($V_{B1}'$).

13. The air-fuel ratio detector as defined in Claim 11 which further includes means (36; 36, 39) for adding a predetermined value ($V_b$) to the detection value ($e_L$) of said limiting current ($I_p$), and reducing the detection value ($e_R$; $e_R'$) of said current ($I_c$) flowing to said second electrode.

14. The air-fuel ratio detector as defined in Claim 1 which further includes control means ($A_4$)

for stopping the application of a voltage ($V_{B1}'$) to said lean air-fuel ratio detection means in the rich range.

15. The air-fuel ratio detector as defined in Claim 1 which further includes means ($T_R$) for inverting the polarity of the impressed voltage to said lean air-fuel ratio detection means in accordance with the output of discrimination means ($C_1$).

16. The air-fuel ratio detector as defined in Claim 15 wherein said inversion means consists of means ($T_R$) for switching the impressed voltage to said second electrode (3) of said lean air-fuel ratio detection means to said first voltage ($V_{B1}'$) and second voltage (0V) in accordance with the output of said discrimination means ($C_1$), and applies an intermediate voltage ($V_b$) between said first voltage ($V_{B1}'$) and said second voltage (0V) to said first electrode (2).

17. The air-fuel ratio detector as defined in Claim 15 which further includes means (36) for adding a predetermined value ($V_b$) to the detection value ($e_L$) of said limiting current ($I_p$).

**Patentansprüche**

1. Luft-Kraftstoffverhältnis-Sensor, umfassend:
einen Trockenelektrolyten (127; 1; 50),
eine erste Elektrode (123; 2; 51), eine zweite Elektrode (124; 3; 52) und eine dritte Elektrode (126; 6; 53), die jeweils auf dem Trockenelektrolyten angeordnet sind,
Mittel (130; 10) zur Zuführung von Abgas mittels begrenzter Diffusion zu der ersten und der dritten Elektrode unter Bildung einer kombinierten Meßzellenkonstruktion für mageres Verhältnis und stöchiometrisches Verhältnis, und
eine Spannungsversorgung ($V_r$) zum Anlegen einer Erregerspannung an die erste und die zweite Elektrode, dadurch gekennzeichnet, daß
ein mageres Mischungsverhältnis aus einem Pumpstrom erfaßt wird, der fließt, wenn durch die Abgaszuführmittel diffundierter Sauerstoff von der ersten zur zweiten Elektrode gepumpt wird; und durch
eine Stromversorgung ($V_r$, 137), die einen vorbestimmten Strom zwischen der ersten und der dritten Elektrode fließen läßt; und
Regelmittel (134, 135) Regelung der von der Spannungsversorgung zugeführten Erregerspannung ($E_L$) zur Aufrechterhaltung des Potentials der dritten Elektrode, so daß es gleich einer vorbestimmten Spannung ($e_s$) ist, wodurch ein stöchiometrisches Mischungsverhältnis erfaßt wird aus einer EMK, die zwischen der ersten und der zweiten oder zwischen der zweiten und der dritten Elektrode erzeugt wird, wenn Sauerstoff von der ersten zur dritten Elektrode wandert und die dritte Elektrode in einer Sauerstoffatmosphäre angeordnet ist.

2. Luft-Kraftstoffverhältnis-Sensor nach Anspruch 1, ferner umfassend Mittel (141, 142) zum Kurzschließen der ersten und der zweiten Elektrode bei fettem Mischungsverhältnis.

3. Luft-Kraftstoffverhältnis-Sensor nach Anspruch 1, ferner umfassend Mittel (134, 145), um eine an die erste und die zweite Elektrode anzulegende Spannung ($e_s$) entsprechend dem Mischungsverhältnis änderbar zu machen.

4. Luft-Kraftstoffverhältnis-Sensor nach Anspruch 3, wobei die Änderungsmittel (134, 145) ferner Swingungsunterdrückungsmittel (146, 147) aufweisen.

5. Luft-Kraftstoffverhältnis-Sensor nach Anspruch 3, ferner umfassend Mittel (149, 150, 151, 152), um die aufgedrückte Spannung ($e_s$) an einem Punkt eines stöchiometrischen Mischungsverhältnisses schrittweise zu ändern.

6. Luft-Kraftstoffverhältnis-Sensor nach Anspruch 1, wobei die Diffusionsbegrenzungsmittel für die Meßzelle für mageres Mischungsverhältnis aus schlitzförmigen Diffusionbahnen (130 in Fig. 9) bestehen.

7. Luft-Krafstoffverhältnis-Sensor nach Anspruch 1, wobei die Diffusionsbegrenzungsmittel für die Meßzelle für mageres Mischungsverhältnis aus gebohrten Diffusionlöchern (130 in Fig. 10) bestehen.

8. Luft-Kraftstoffverhältnis-Sensor nach Anspruch 1, wobei die dritte Elektrode (126) von einem porösen Organ (131'' in den Fig. 12, 13, 14, 15, 17 und 18) überdeckt ist.

9. Luft-Kraftstoffverhältnis-Sensor nach Anspruch 1, wobei die erste Elektrode (123) und die dritte Elektrode (126) in derselben Ebene des Trockenelektrolyten (127) gebildet und mit porösen Abschnitten (125, 131'' in den Fig. 13, 14, 17 und 18) mit unterschiedlichem Diffusionswiderstand überdeckt sind.

10. Luft-Kraftstoffverhältnis-Sensor nach Anspruch 1, wobei die dritte Elektrode (126 in den Fig. 15 und 16) im Inneren einer Diffusionskammer (128) der Maßzelle für mageres Mischungsverhältnis angeordnet ist.

11. Luft-Krafstoffverhältnis-Sensor nach Anspruch 1, ferner umfassend ein Regeleinheit ($A_5$) zur Regelung der EMK ($e_0$) derart, daß sie konstant wird, und wobei das fette Mischungsverhältnis aus einem in die zweite Elektrode fließendem Strom ($I_c$) erfaßt wird.

12. Luft-Krafstoffverhältnis-Sensor nach Anspruch 11, ferner umfassend Mittel ($C_2$, SW), die das Ausgangssignal der Stromerfassungsmittel stoppen, wenn die EMK ($e_o$) einen vorbestimmten Wert ($V_{B1}'$) unterschreitet.

13. Luft-Kraftstoffverhältnis-Sensor nach Anspruch 11, ferner umfassend Mittel (36; 36, 39) zur Addition eines vorbestimmten Werts ($V_b$) zu dem Meßwert ($e_L$) des Begrenzungsstroms ($I_p$) und zur Verminderung des Meßwerts ($e_R$; $e_R'$) dieses zur zweiten Elektrode fließendem Stroms ($I_c$).

14. Luft-Kraftstoffverhältnis-Sensor nach Anspruch 1, ferner umfassend eine Regeleinheit ($A_4$), die das Anlegen einer Spannung ($V_{B1}'$) an die Meßzelle für mageres Mischungsverhältnis im fetten Bereich unterbricht.

15. Luft-Kraftstoffverhältnis-Sensor nach Anspruch 1, ferner umfassend Mittel ($T_R$) zum Umkehren der Polarität der der Meßzelle für mageres Mischungsverhältnis aufgedrückten

Spannung entsprechend dem Ausgangssignal eines Unterscheidungselements ($C_1$).

16. Luft-Kraftstoffverhältnis-Sensor nach Anspruch 15, wobei die Umkehrmittel aus einem Element ($T_R$) bestehen, das die der zweiten Elektrode (3) der Meßzelle für mageres Mischungsverhältnis aufgedrückte Spannung auf die erste Spannung ($V_{B1}'$) und die zweite Spannung (0 V) nach Maßgabe des Ausgangssignals des Unterscheidungselements ($C_1$) umschaltet und an die erste Elektrode (2) eine zwischen der ersten Spannung ($V_{B1}'$) und der zweiten Spannung (0 V) liegende Zwischenspannung ($V_b$) anlegt.

17. Luft-Kraftstoffverhältnis-Sensor nach Anspruch 15, ferner umfassend Mittel (36) zur Addition eines vorbestimmten Werts ($V_b$) zu dem Meßwert ($e_L$) des Begrenzungsstroms ($I_p$).

**Revendications**

1. Détecteur de rapport air-carburant comportant:

un électrolyte solide (127; 1; 50),

une première électrode (123; 2; 51) une seconde électrode (124; 3; 52) et une troisième électrode (126; 6; 53) disposées chacune sur ledit électrolyte solide,

des moyens (130; 10) pour délivrer un gaz d'échappement par diffusion limitée auxdites première et troisième électrodes de manière à constituer une structure combinée de cellule de détection d'un mélange pauvre et d'une cellule de détection stoéchiométrique, et

des moyens d'alimentation en tension ($V_r$) pour appliquer une tension d'excitation aux bornes desdites première et seconde électrodes, caractérisé en ce que

un rapport air-carburant pauvre est détecté à partir d'un courant de pompage circulant lorsque de l'oxygène diffusé par lesdits moyens d'alimentation en gaz d'échappement est pompé depuis ladite première électrode vers ladite seconde électrode, et par

des moyens d'alimentation en courant ($V_r$, 137) pour provoquer la circulation d'un courant prédéterminé entre lesdites première et troisième électrodes; et

des moyens de commande (134, 135) pour commander la tension d'excitation ($E_L$) délivrée par lesdits moyens d'alimentation en tension pour maintenir le potentiel de ladite troisième électrode égal à une tension prédéterminée ($e_s$), de telle sorte qu'un rapport air-carburant stoéchiométrique est détecté à partir d'une force électromotrice produite entre lesdites première et seconde électrodes ou entre lesdites seconde et troisième électrodes lorsque de l'oxygène passe de ladite première électrode à ladite troisième électrode et que ladite troisième électrode est placée sous une atmosphère d'oxygène.

2. Détecteur de rapport air-carburant selon la revendication 1, comprenant en outre des moyens (141, 142) pour court-circuiter lesdites première et seconde électrodes dans un plage de mélange riche.

3. Détecteur de rapport air-carburant selon la revendication 1, comprenant en outre des moyens (134, 145) pour rendre une tension ($e_s$) à appliquer auxdites première et seconde électrodes variable conformément à un rapport air-carburant.

4. Détecteur de rapport air-carburant selon la revendication 3, dans lequel lesdits moyens variables (134, 145) comprennent en outre des moyens (146, 147) en vue d'empécher une oscillation.

5. Détecteur de rapport air-carburant selon la revendication 3, comprenant en outre des moyens (149, 150, 151, 152) pour modifier par paliers la tension appliquée ($e_s$) en un point du rapport air-carburant stoéchiométrique.

6. Détecteur de rapport air-carburant selon la revendication 1, dans lequel lesdits moyens de limitation de diffusion pour lesdits moyens de détection du rapport air-carburant pauvre sont des trajets de diffusion analogues à des fentes (130 sur la Figure 9).

7. Détecteur de rapport air-carburant selon la revendication 1, dans lequel lesdits moyens de limitation de diffusion pour lesdits moyens de détection du rapport air-carburant pauvre sont des trous de diffusion de type trou foré (130 sur la Figure 10).

8. Détecteur de rapport air-carburant selon la revendication 1, dans lequel ladite troisième électrode (126) est recouverte d'un élément poreux (131'' sur les Figures 12, 13, 14, 15, 17 et 18).

9. Détecteur de rapport air-carburant selon la revendication 1, dans lequel ladite première électrode (123) et ladite troisième électrode (126) sont réalisées sur le même plan dudit électrolyte solide (127), et sont recouvertes de parties poreuses (125, 131'' sur les Figures 13; 14, 17 et 18) ayant une résistance de diffusion variable.

10. Détecteur de rapport air-carburant selon la revendication 1, dans laquelle ladite troisième électrode (126 sur les Figures 15 et 16) est disposée à l'intérieur d'une chambre de diffusion (128) desdits moyens de détection du rapport air-carburant pauvre.

11. Détecteur de rapport air-carburant selon la revendication 1, comprenant en outre des moyens de commande ($A_5$) pour commander ladite force électromotrice ($e_0$) de sorte qu'elle devienne constante, et dans lequel le rapport air-carburant sur le côté riche est détecté à partir d'un courant ($I_c$) circulant dans ladite seconde électrode.

12. Détecteur de rapport air-carburant selon la revendication 11, comprenant en outre des moyens ($C_2$, SW) pour couper la sortie desdits moyens de détection de courant lorsque ladite force électromotrice ($e_0$) est inférieure à une valeur prédéterminée ($V_{B1}'$).

13. Détecteur de rapport air-carburant selon la revendication 11, comprenant en outre des moyens (36; 36, 39) pour ajouter une valeur prédéterminée ($V_b$) à la valeur de détection ($e_L$) dudit courant de limitation ($I_p$), et réduire la valeur de détection ($e_R$; $e_R'$) dudit courant ($I_c$) circulant vers ladite seconde électrode.

14. Détecteur de rapport air-carburant selon la revendication 1, comprenant en outre des moyens de commande ($A_4$) pour interrompre l'application d'une tension ($V_{B1}'$) auxdits moyens de détection de rapport air-carburant pauvre dans la plage de mélange riche.

15. Détecteur de rapport air-carburant selon la revendication 1, comprenant en outre des moyens ($T_R$) pour inverser la polarité de la tension appliquée auxdits moyens de détection de rapport air-carburant pauvre conformément à la sortie des moyens de discrimination ($C_1$).

16. Détecteur de rapport air-carburant selon la revendication 15, dans lequel lesdits moyens d'inversion consistent en moyens ($T_R$) pour commuter la tension appliquée à ladite seconde électrode (3) desdits moyens de détection du rapport air-carburant pauvre à ladite première tension ($V_{B1}'$) et ladite seconde tension (0V) conformément à la sortie desdits moyens de discrimination ($C_1$), et appliquer une tension intermédiaire ($V_b$) entre ladite première tension ($V_{B1}'$) et ladite seconde tension (0V) à ladite première électrode (2).

17. Détecteur de rapport air-carburant selon la revendication 15, comprenant en outre des moyens (36) pour ajouter une valeur prédéterminée ($V_b$) à la valeur de détection ($e_L$) dudit courant de limitation ($I_p$).

FIG. 1

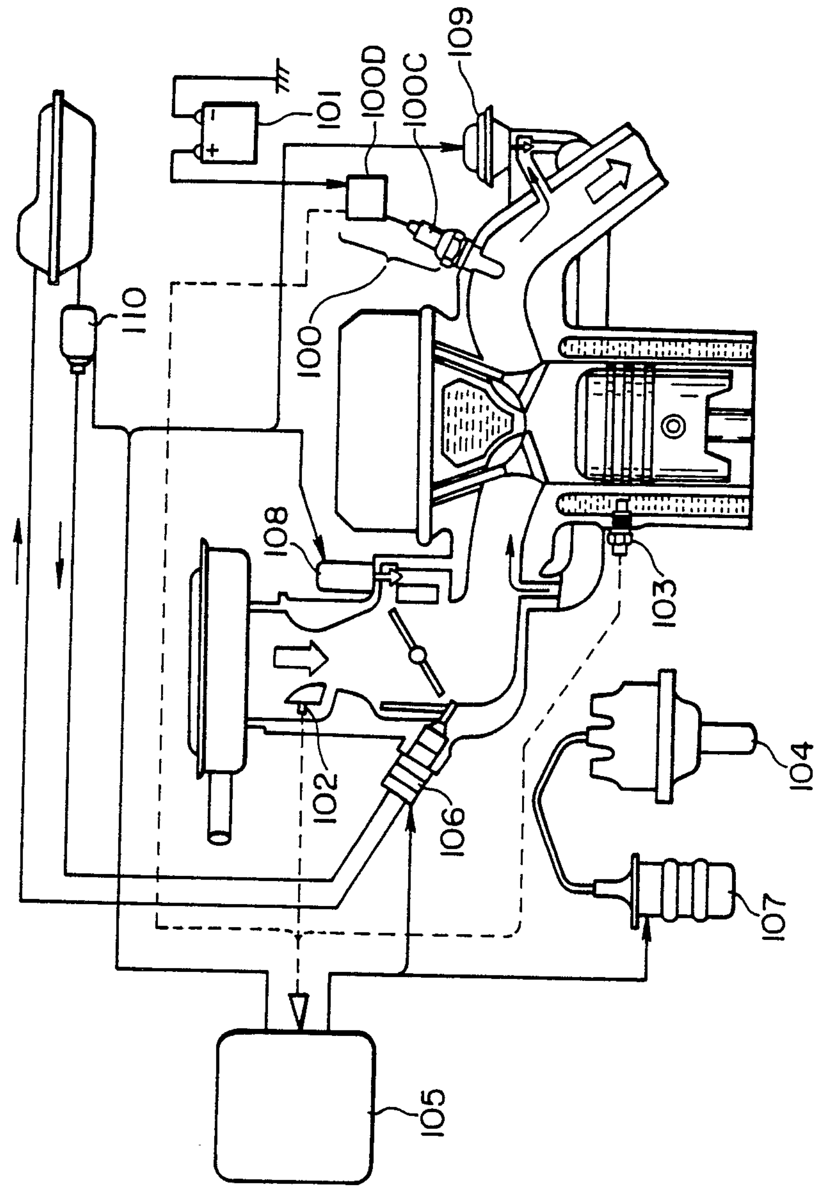

FIG. 2

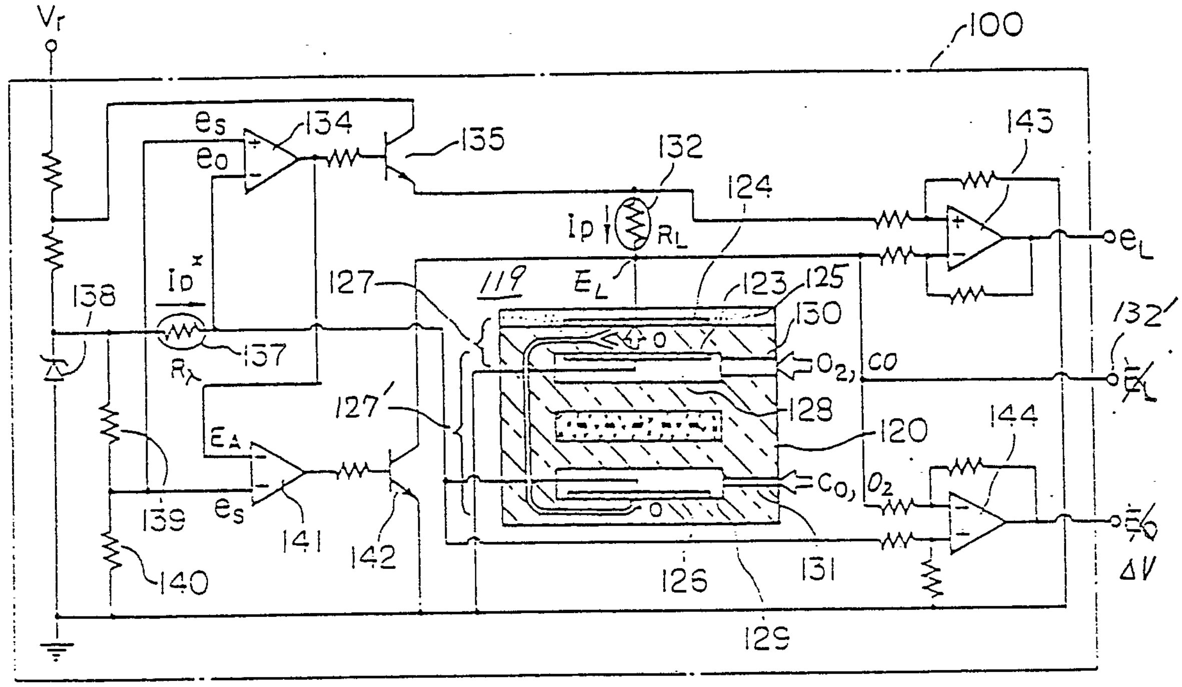
Vr
100
es
eo
134
135
132
143
124
Ip
RL
eL
Ip
127
119
EL
123
125
138
130
132'
137
Rλ
O2,
CO
128
127'
120
144
EA
139
es
141
142
CO,
O2
ΔV
140
126
131
129

FIG. 3

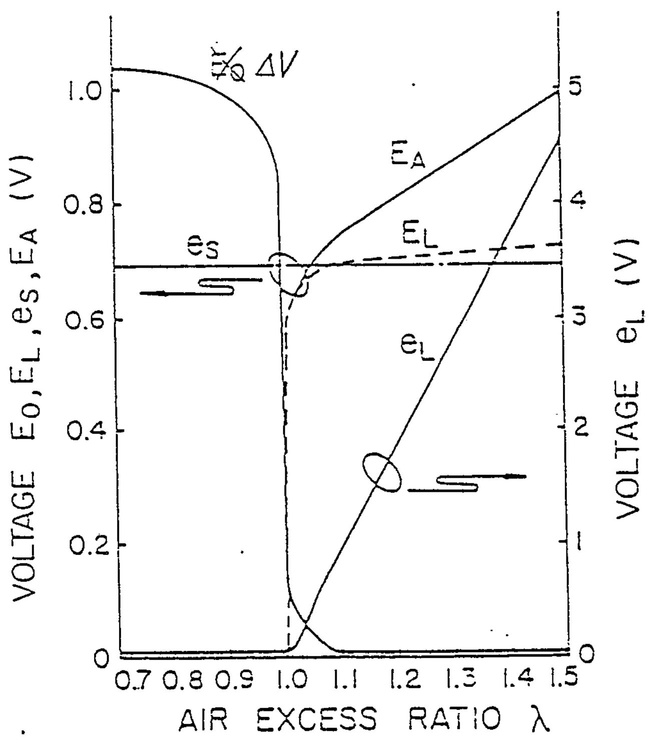
ΔV
1.0
0.8
0.6
0.4
0.2
0
EA
EL
es
eL
5
4
3
2
1
0
VOLTAGE Eo, EL, es, EA (V)
VOLTAGE eL (V)
0.7 0.8 0.9 1.0 1.1 1.2 1.3 1.4 1.5
AIR EXCESS RATIO λ

FIG. 4

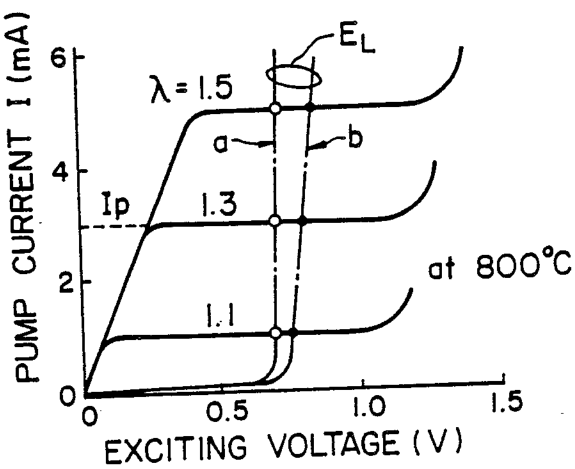


FIG. 5

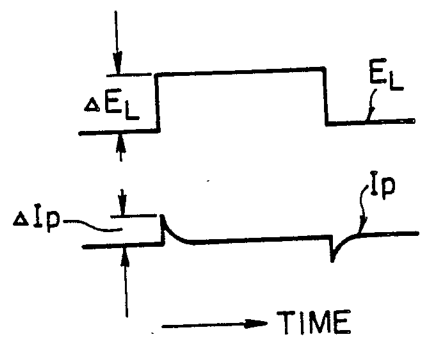


FIG. 7

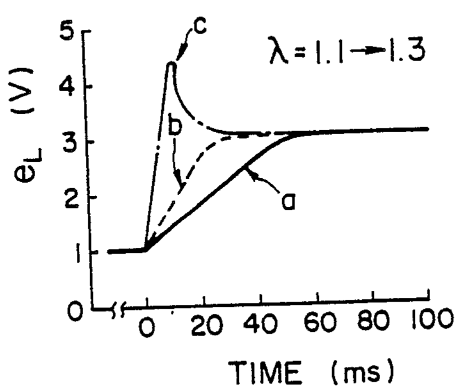


FIG. 8

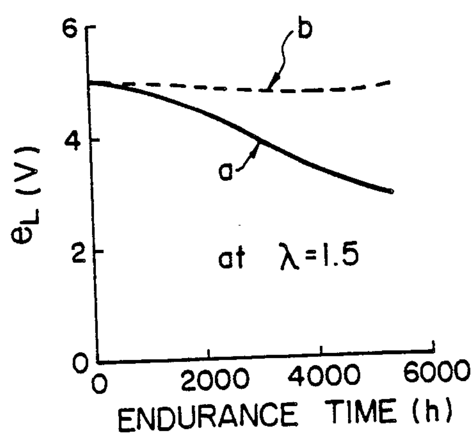

FIG. 6

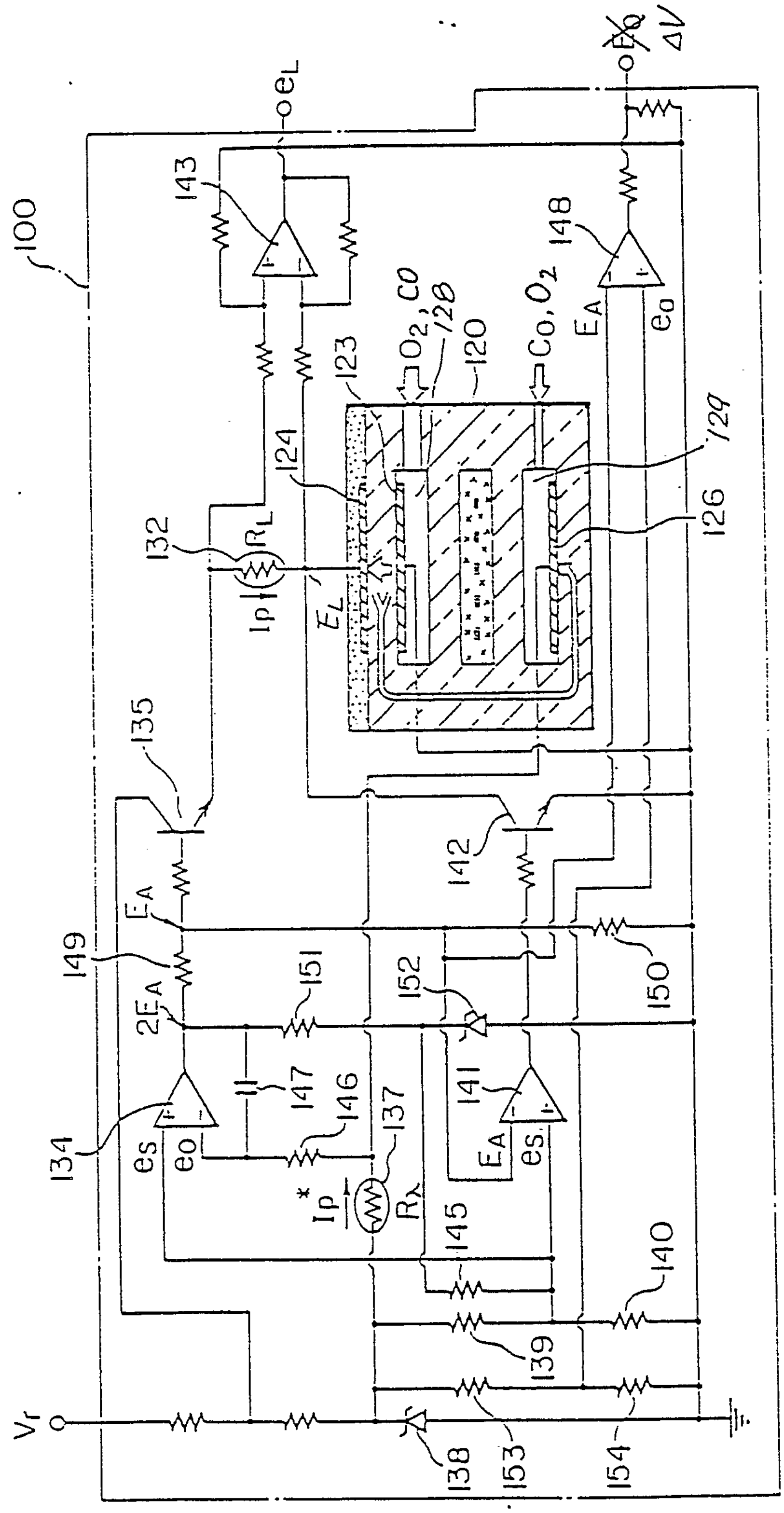
100
143
eL
148
EA
e0
ΔV
123
O2, CO
128
120
Co, O2
124
129
132
RL
Ip
EL
126
135
142
149
EA
2EA
151
152
150
134
es
e0
147
146
137
Ip*
Rλ
141
EA
es
145
140
139
Vr
138
153
154

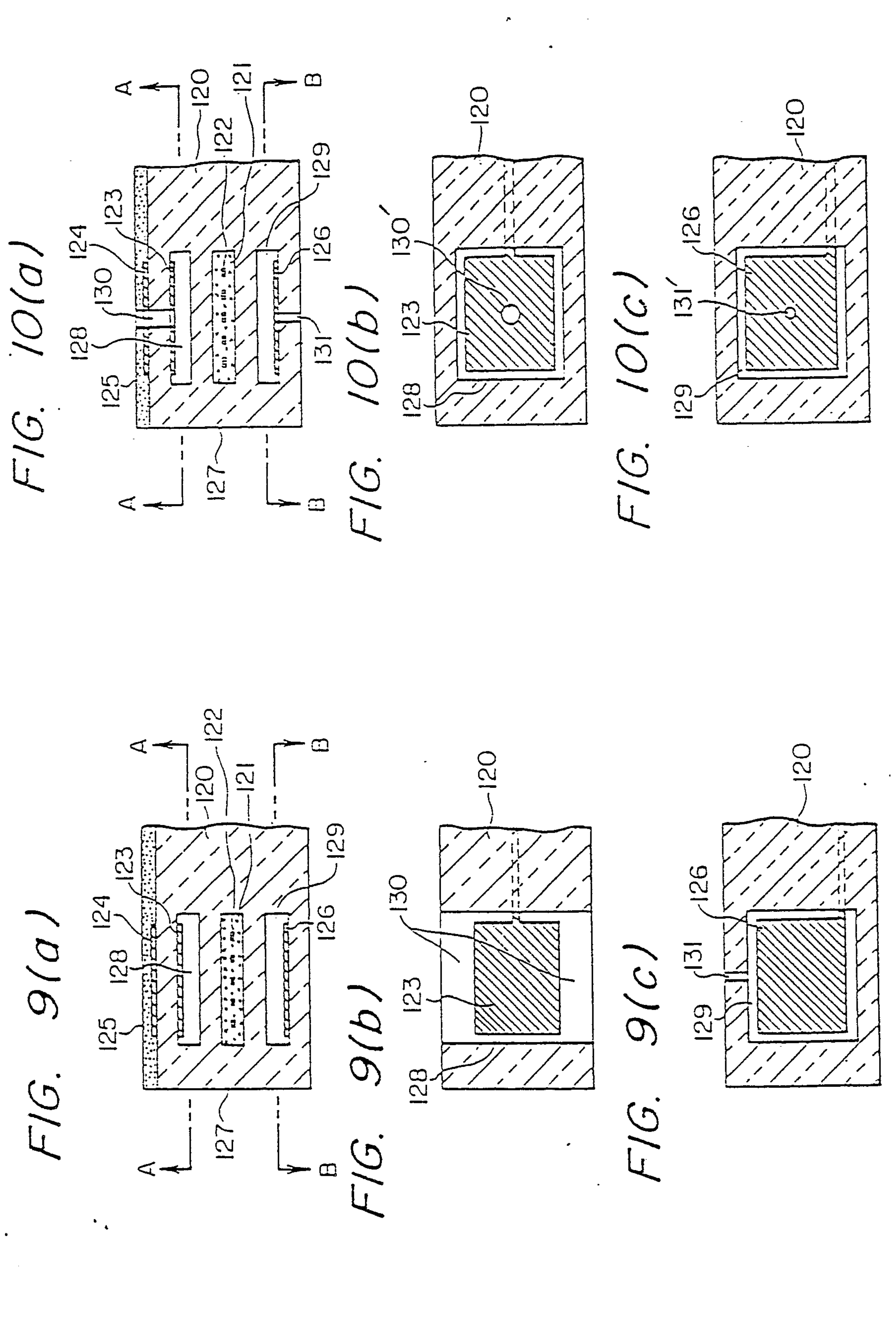


FIG. 10(a)
FIG. 10(b)
FIG. 10(c)
FIG. 9(a)
FIG. 9(b)
FIG. 9(c)

FIG. 11

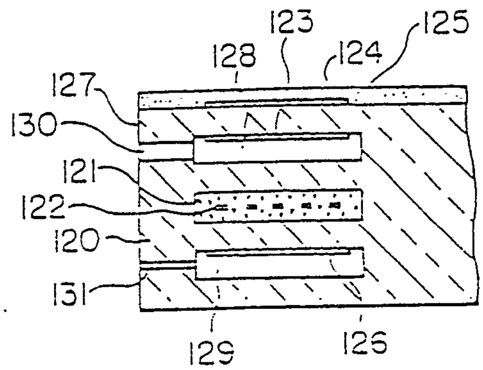


FIG. 12

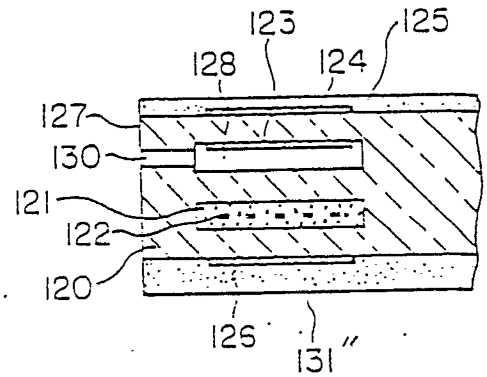


FIG. 13

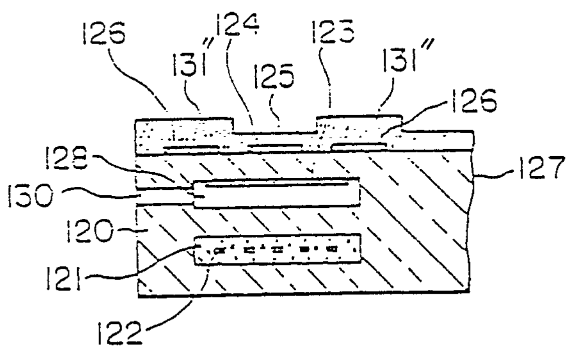


FIG. 14

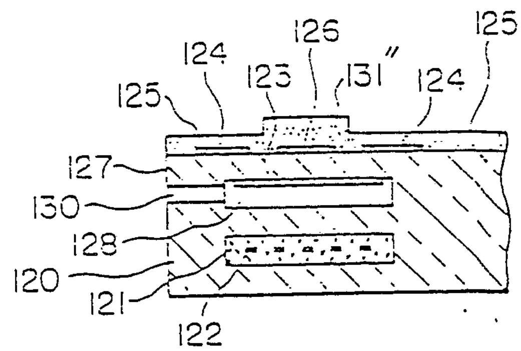


FIG. 15

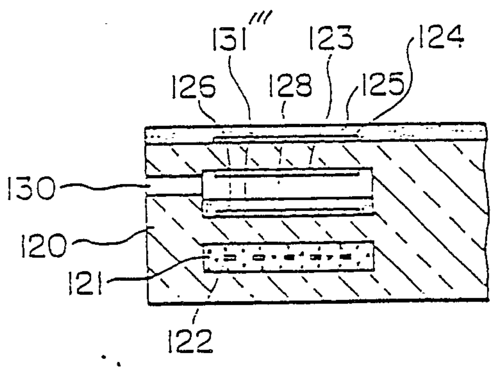


FIG. 16

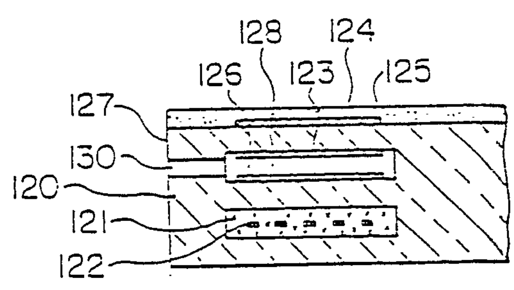

FIG. 17

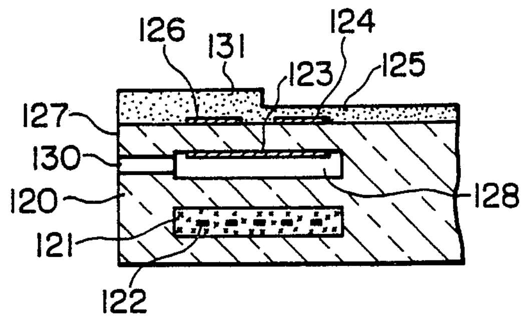


FIG. 18

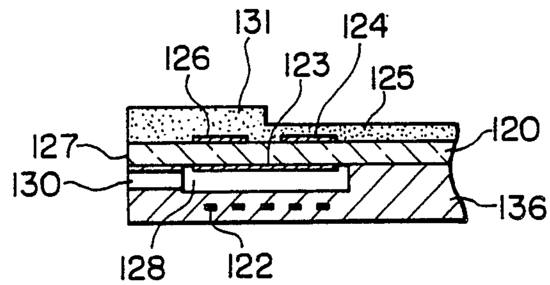


FIG. 19

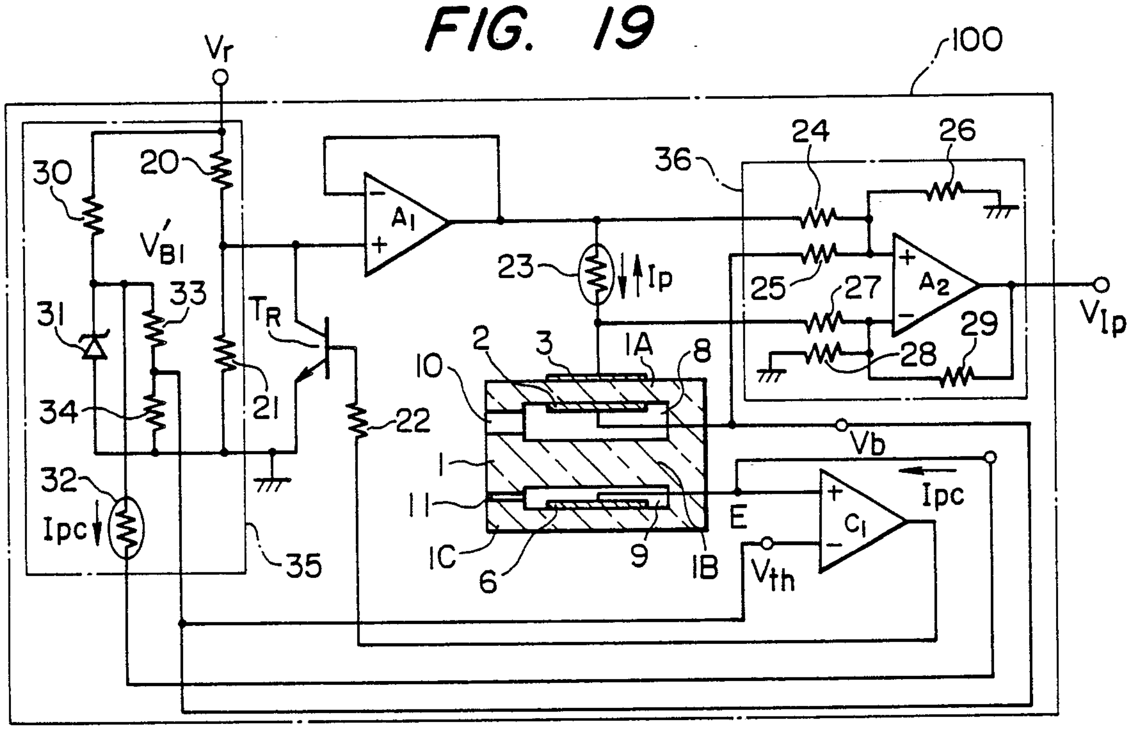


FIG. 20

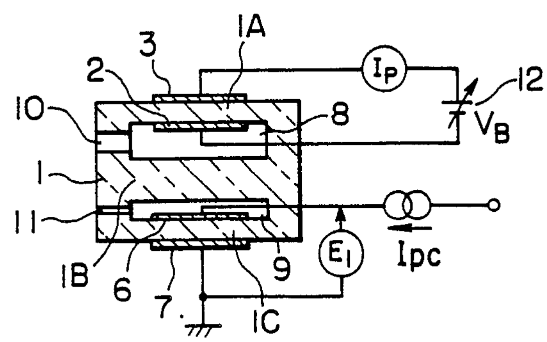

FIG. 21

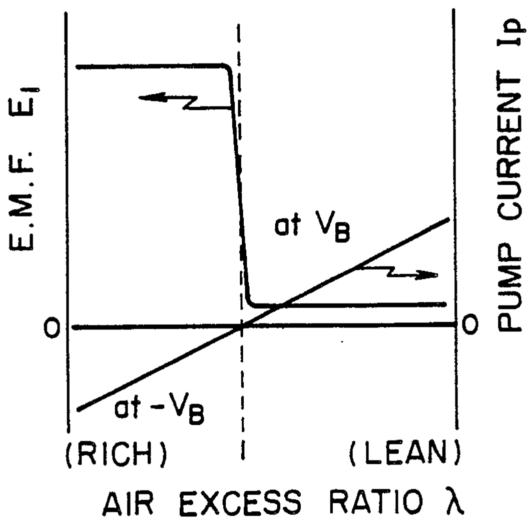


FIG. 22

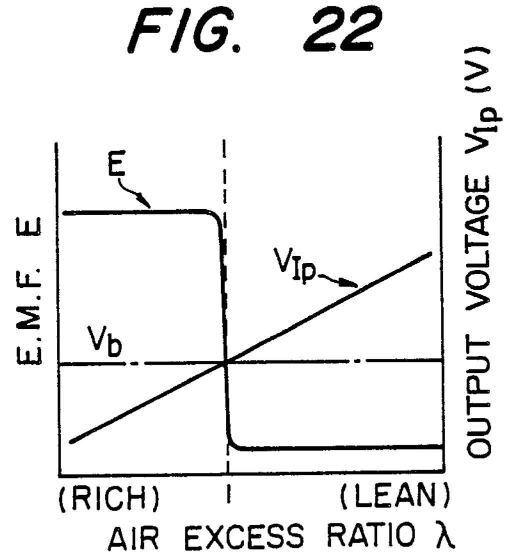


FIG. 23

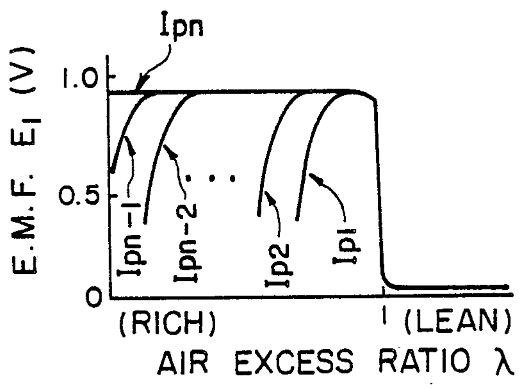


FIG. 25

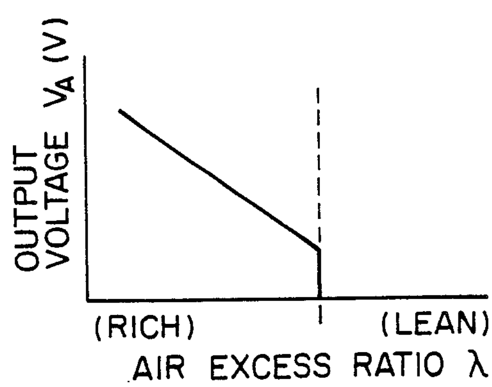


FIG. 24

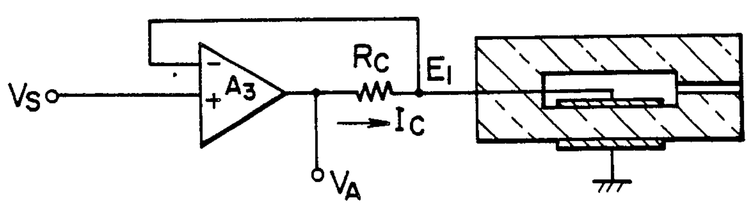

FIG. 26

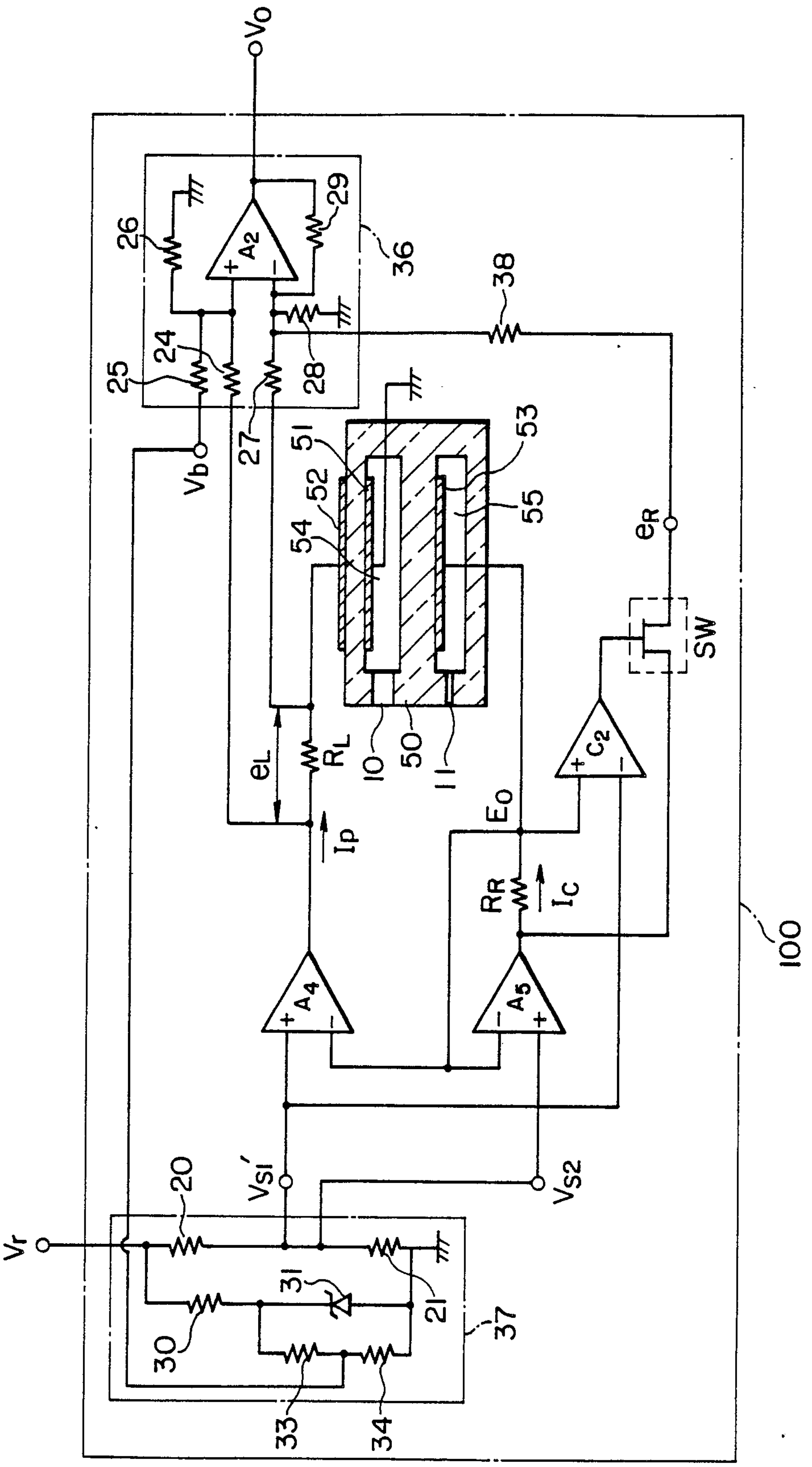
Vo
Vb
Vr
Vs1'
Vs2
eL
eR
RL
RR
Ip
Ic
Eo
A2
A4
A5
C2
SW
10
11
20
21
24
25
26
27
28
29
30
31
33
34
36
37
38
50
51
52
53
54
55
100

FIG. 28

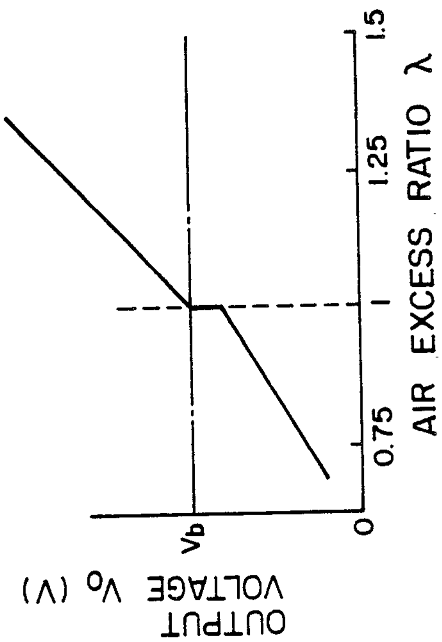
OUTPUT
VOLTAGE $V_O$ (V)
$V_b$
0
0.75
1
1.25
1.5
AIR EXCESS RATIO λ

FIG. 27

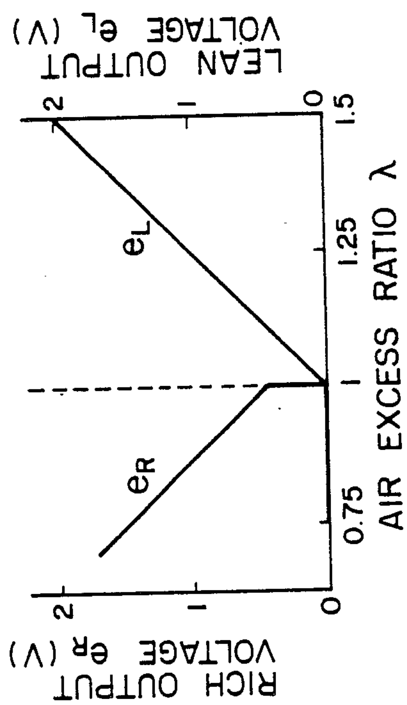
LEAN OUTPUT
VOLTAGE $e_L$ (V)
2
1
0
$e_L$
$e_R$
RICH OUTPUT
VOLTAGE $e_R$ (V)
2
1
0
0.75
1
1.25
1.5
AIR EXCESS RATIO λ

FIG. 29

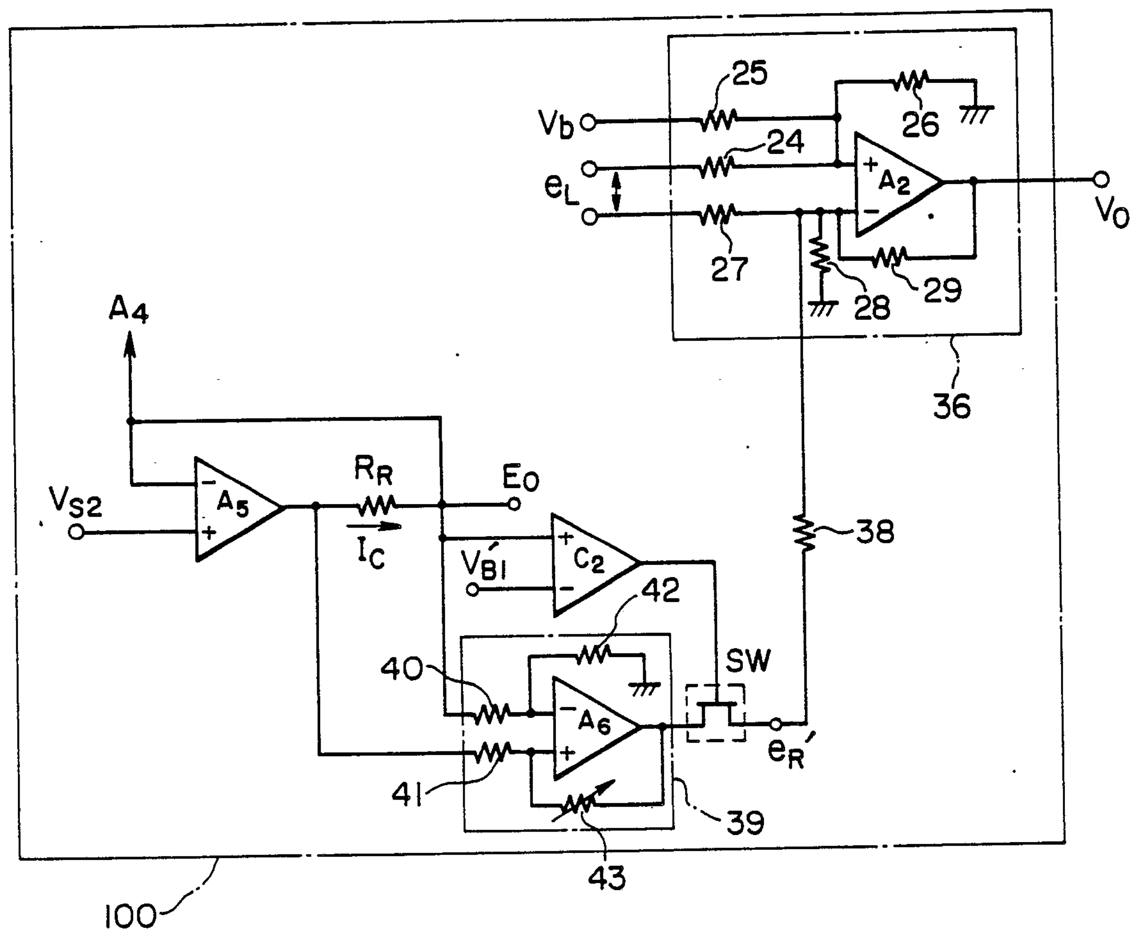
25
Vb
26
24
A2
eL
VO
27
28
29
A4
36
RR
EO
VS2
A5
IC
VB1
C2
42
38
40
SW
A6
eR'
41
39
43
100

FIG. 30

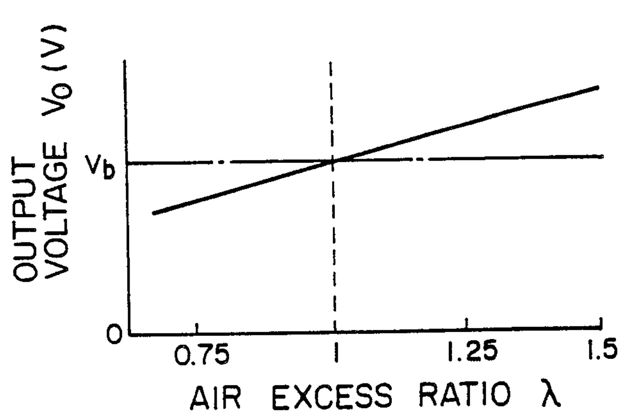
OUTPUT VOLTAGE VO (V)
Vb
0
0.75
1
1.25
1.5
AIR EXCESS RATIO λ